(19) Europäisches Patentamt

European Patent Office

Office européen des brevets

(11) **EP 2 557 867 A1**

(12) **EUROPEAN PATENT APPLICATION**

(43) Date of publication:
**13.02.2013 Bulletin 2013/07**

(51) Int Cl.:
***H04W 56/00*** *(2009.01)*

(21) Application number: **11177286.9**

(22) Date of filing: **11.08.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Panasonic Corporation
Kadoma-shi
Osaka 571-8501 (JP)**

(72) Inventors:
• **Löhr, Joachim**
  **63225 Langen (DE)**
• **Suzuki, Hidetoshi**
  **Osaka-shi, Osaka 540-6207 (JP)**
• **Feuersänger, Martin**
  **63225 Langen (DE)**

(74) Representative: **Grünecker, Kinkeldey,
Stockmair & Schwanhäusser
Leopoldstrasse 4
80802 München (DE)**

(54) **Timing advance configuration for multiple uplink component carriers**

(57) The invention relates to methods for time aligning uplink transmissions by a mobile terminal in a mobile communication system. In order to allow for aligning the timing of uplink transmissions on uplink target cells using a different timing advance than for a reference cell, the invention suggests to time align the uplink component carriers based on a reference time alignment of the time-aligned reference cell. The mobile terminal performs measurements relating to transmission and/or reception time differences on the target/reference cell, and reports same to the eNodeB. The eNodeB calculates the timing advance for the target cell based on the measurement results and on the reference timing advance used for the uplink transmission on the time-aligned reference cell. The timing advance is reported to the mobile terminal, which then uplink-time-aligns its target cell according to the received timing advance value.

Fig. 15

**Description**

**FIELD OF THE INVENTION**

The invention relates to methods for aligning the timing of uplink transmissions by a mobile terminal in a mobile communication system. The invention is also providing apparatus and system for performing the methods described herein, as well as computer readable media the instructions of which cause the apparatus and system to perform the methods described herein.

**TECHNICAL BACKGROUND**

**Long Term Evolution (LTE)**

Third-generation mobile systems (3G) based on WCDMA radio-access technology are being deployed on a broad scale all around the world. A first step in enhancing or evolving this technology entails introducing High-Speed Downlink Packet Access (HSDPA) and an enhanced uplink, also referred to as High Speed Uplink Packet Access (HSUPA), giving a radio-access technology that is highly competitive.

In order to be prepared for further increasing user demands and to be competitive against new radio access technologies 3GPP introduced a new mobile communication system which is called Long Term Evolution (LTE). LTE is designed to meet the carrier needs for high speed data and media transport as well as high capacity voice support to the next decade. The ability to provide high bit rates is a key measure for LTE.

The work item (WI) specification on Long-Term Evolution (LTE) called Evolved UMTS Terrestrial Radio Access (UTRA) and UMTS Terrestrial Radio Access Network (UTRAN) is to be finalized as Release 8 (LTE Rel. 8). The LTE system represents efficient packet-based radio access and radio access networks that provide full IP-based functionalities with low latency and low cost. In LTE, scalable multiple transmission bandwidths are specified such as 1.4, 3.0, 5.0, 10.0, 15.0, and 20.0 MHz, in order to achieve flexible system deployment using a given spectrum. In the downlink, Orthogonal Frequency Division Multiplexing (OFDM) based radio access was adopted because of its inherent immunity to multipath interference (MPI) due to a low symbol rate, the use of a cyclic prefix (CP), and its affinity to different transmission bandwidth arrangements. Single-carrier frequency division multiple access (SC-FDMA) based radio access was adopted in the uplink, since provisioning of wide area coverage was prioritized over improvement in the peak data rate considering the restricted transmit power of the user equipment (UE). Many key packet radio access techniques are employed including multiple-input multiple-output (MIMO) channel transmission techniques, and a highly efficient control signaling structure is achieved in LTE Rel. 8/9.

**LTE architecture**

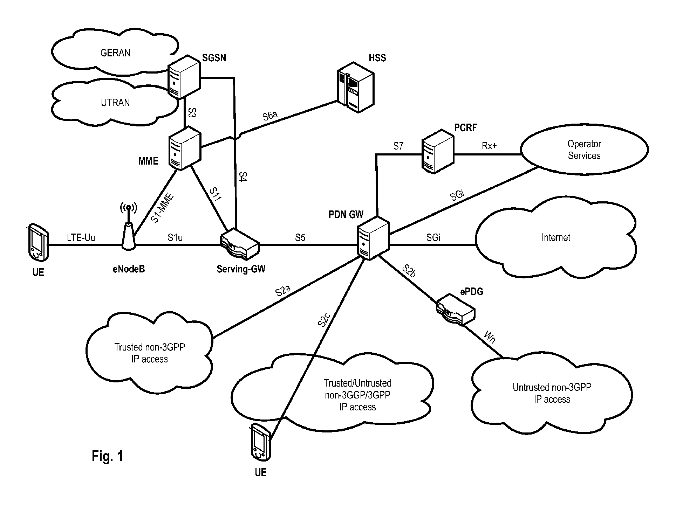

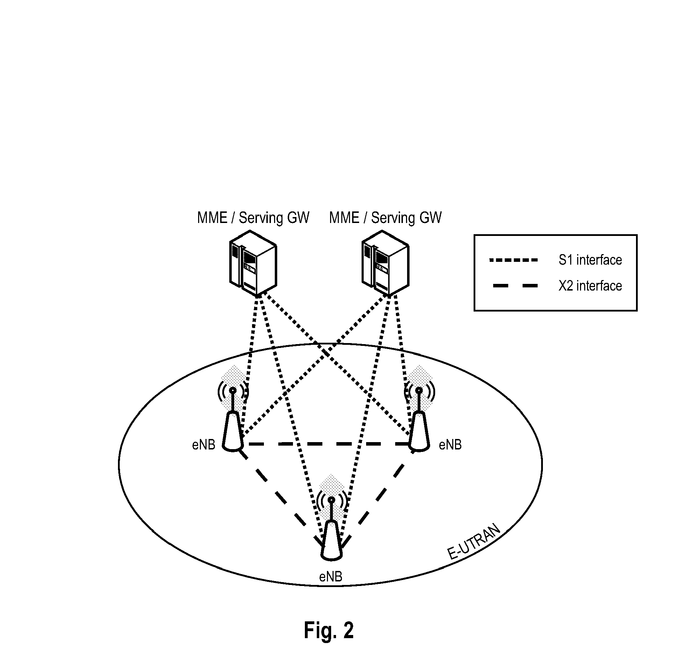

The overall architecture is shown in Fig. 1 and a more detailed representation of the E-UTRAN architecture is given in Fig. 2. The E-UTRAN consists of eNodeB, providing the E-UTRA user plane (PDCP/RLC/MAC/PHY) and control plane (RRC) protocol terminations towards the user equipment (UE). The eNodeB (eNB) hosts the Physical (PHY), Medium Access Control (MAC), Radio Link Control (RLC), and Packet Data Control Protocol (PDCP) layers that include the functionality of user-plane header-compression and encryption. It also offers Radio Resource Control (RRC) functionality corresponding to the control plane. It performs many functions including radio resource management, admission control, scheduling, enforcement of negotiated uplink Quality of Service (QoS), cell information broadcast, ciphering/deciphering of user and control plane data, and compression/decompression of downlink/uplink user plane packet headers. The eNodeBs are interconnected with each other by means of the X2 interface.

The eNodeBs are also connected by means of the S1 interface to the EPC (Evolved Packet Core), more specifically to the MME (Mobility Management Entity) by means of the S1-MME and to the Serving Gateway (SGW) by means of the S1-U. The S1 interface supports a many-to-many relation between MMEs/Serving Gateways and eNodeBs. The SGW routes and forwards user data packets, while also acting as the mobility anchor for the user plane during inter-eNodeB handovers and as the anchor for mobility between LTE and other 3GPP technologies (terminating S4 interface and relaying the traffic between 2G/3G systems and PDN GW). For idle state user equipments, the SGW terminates the downlink data path and triggers paging when downlink data arrives for the user equipment. It manages and stores user equipment contexts, e.g. parameters of the IP bearer service, network internal routing information. It also performs replication of the user traffic in case of lawful interception.

The MME is the key control-node for the LTE access-network. It is responsible for idle mode user equipment tracking and paging procedure including retransmissions. It is involved in the bearer activation/deactivation process and is also responsible for choosing the SGW for a user equipment at the initial attach and at time of intra-LTE handover involving Core Network (CN) node relocation. It is responsible for authenticating the user (by interacting with the HSS).

The Non-Access Stratum (NAS) signaling terminates at the MME and it is also responsible for generation and allocation of temporary identities to user equipments. It checks the authorization of the user equipment to camp on the service provider's Public Land Mobile Network (PLMN) and enforces user equipment roaming restrictions. The MME is the termination point in the network for ciphering/integrity protection for NAS signaling and handles the security key management. Lawful interception of signaling is also supported by the MME. The MME also provides the control plane function for mobility between LTE and 2G/3G access networks with the S3 interface terminating at the MME from the SGSN. The MME also terminates the S6a interface towards the home HSS for roaming user equipments.

**L1/2 Control Signalling**

In order to inform the scheduled users about their allocation status, transport format and other data related information (e.g. HARQ) L1/L2 control signaling needs to be transmitted on the downlink along with the data. The control signaling needs to be multiplexed with the downlink data in a sub frame (assuming that the user allocation can change from sub frame to sub frame). Here, it should be noted that user allocation might also be performed on a TTI (Transmission Time Interval) basis, where the TTI length may be a multiple of the sub frames. The TTI length may be fixed in a service area for all users, may be different for different users, or may even by dynamic for each user. Generally, then the L1/2 control signaling needs only be transmitted once per TTI. The L1/L2 control signalling is transmitted on the Physical Downlink Control Channel (PDCCH). It should be noted that assignments for uplink data transmissions, UL grants, are also transmitted on the PDCCH.

Generally, the information sent on the L1/L2 control signaling may be separated into the following two categories:

- Shared Control Information (SCI) carrying Cat 1 information. The SCI part of the L1/L2 control signaling contains information related to the resource allocation (indication). The SCI typically contains the following information:

    o User identity, indicating the user which is allocated

    o RB allocation information, indicating the resources (Resource Blocks, RBs) on which a user is allocated. Note, that the number of RBs on which a user is allocated can be dynamic.

    o Optional: Duration of assignment, if an assignment over multiple sub frames (or TTIs) is possible

Depending on the setup of other channels and the setup of the Dedicated Control Information (DCI), the SCI may additionally contain information such as ACK/NACK for uplink transmission, uplink scheduling information, information on the DCI (resource, MCS, etc.).

- Dedicated Control Information (DCI) carrying Cat 2/3 information
    The DCI part of the L1/L2 control signaling contains information related to the transmission format (Cat 2) of the data transmitted to a scheduled user indicated by Cat 1. Moreover, in case of application of (hybrid) ARQ it carries HARQ (Cat 3) information. The DCI needs only to be decoded by the user scheduled according to Cat 1. The DCI typically contains information on:

    o Cat 2: Modulation scheme, transport block (payload) size (or coding rate) , MIMO related information, etc.

    o Cat 3: HARQ related information, e.g. hybrid ARQ process number, redundancy version, retransmission sequence number

**[0011]** In the following the detailed L1/L2 control signalling information signalled for DL allocation respectively uplink assignments is described in the following:

Downlink Data Transmission:
Along with the downlink packet data transmission, L1/L2 control signaling is transmitted on a separate physical channel (PDCCH). This L1/L2 control signaling typically contains information on:

    o The physical resource(s) on which the data is transmitted (e.g. subcarriers or subcarrier blocks in case of OFDM, codes in case of CDMA). This information allows the UE (receiver) to identify the resources on which the data is transmitted.

    o The transport Format, which is used for the transmission. This can be the transport block size of the data (payload size, information bits size), the MCS (Modulation and Coding Scheme) level, the Spectral Efficiency, the code rate, etc.. This information (usually together with the resource allocation) allows the UE (receiver) to identify the information bit size, the modulation scheme and the code rate in order to start the demodulation, the de rate matching and the decoding process. In some cases the modulation scheme maybe signaled explicitly.

    o Hybrid ARQ (HARQ) information:

        ■ Process number: Allows the UE to identify the hybrid ARQ process on which the data is mapped

        ■ Sequence number or new data indicator: Allows the UE to identify if the transmission is a new packet or a retransmitted packet

        ■ Redundancy and/or constellation version: Tells the UE, which hybrid ARQ redundancy version is used (required for de-rate matching) and/or which modulation constellation version is used (required for demodulation)

    o UE Identity (UE ID): Tells for which UE the L1/L2 control signaling is intended for. In typical implementations this information is used to mask the CRC of the L1/L2 control signaling in order to prevent other UEs to read this information.

Uplink Data Transmission:
To enable an uplink packet data transmission, L1/L2 control signaling is transmitted on the downlink (PDCCH) to tell the UE about the transmission details. This L1/L2 control signaling typically contains information on:

    o The physical resource(s) on which the UE should transmit the data (e.g. subcarriers or subcarrier blocks in case of OFDM, codes in case of CDMA).

    o The transport Format, the UE should use use for the transmission. This can be the transport block size of the data (payload size, information bits size), the MCS (Modulation and Coding Scheme) level, the Spectral Efficiency, the code rate, etc.. This information (usually together with the resource allocation) allows the UE (transmitter) to pick the information bit size, the modulation scheme and the code rate in order to start the modulation, the rate matching and the encoding process. In some cases the modulation scheme maybe signaled explicitly.

    o Hybrid ARQ information:

        ■ Process number: Tells the UE from which hybrid ARQ process it should pick the data

        ■ Sequence number or new data indicator: Tells the UE to transmit a new packet or to retransmit a packet

        ■ Redundancy and/or constellation version: Tells the UE, which hybrid ARQ redundancy version to use (required for rate matching) and/or which modulation constellation version to use (required for modulation)

    o UE Identity (UE ID): Tells which UE should transmit data. In typical implementations this information is used to mask the CRC of the L1/L2 control signaling in order to prevent other UEs to read this information.

There are several different flavors how to exactly transmit the information pieces mentioned above. Moreover, the L1/L2 control information may also contain additional information or may omit some of the information. E.g.:

■ HARQ process number may not be needed in case of a synchronous HARQ protocol

■ A redundancy and/or constellation version may not be needed if Chase Combining is used (always the same redundancy and/or constellation version) or if the sequence of redundancy and/or constellation versions is pre defined.

■ Power control information may be additionally included in the control signaling

■ MIMO related control information, such as e.g. precoding, may be additionally included in the control signaling.

■ In case of multi-codeword MIMO transmission transport format and/or HARQ information for multiple code words may be included

For uplink resource assignments (PUSCH) signalled on PDCCH in LTE, the L1/L2 control information does not contain a HARQ process number, since a synchronous HARQ protocol is employed for LTE uplink. The HARQ process to be used for an uplink transmission is given by the timing. Furthermore it should be noted that the redundancy version (RV) information is jointly encoded with the transport format information, i.e. the RV info is embedded in the transport format (TF) field. The TF respectivley MCS field has for example a size of 5bits, which corresponds to 32 entries. 3 TF/MCS table entries are reserved for indicating RVs 1,2 or 3. The remaining MCS table entries are used to signal the MCS level (TBS) implicitly indicating RV0. The size of the CRC field of the PDCCH is 16bits. Further detailed information on the control information for uplink resource allocation on PUSCH can be found in TS36.212 section 5.3.3 and TS36.213 section 8.6.

For downlink assignments (PDSCH) signalled on PDCCH in LTE the Redundancy Version (RV) is signalled separately in a two-bit field. Furthermore the modulation order information is jointly encoded with the transport format information. Similar to the uplink case there is 5bit MCS field signalled on PDCCH. 3 of the entries are reserved to signal an explicit modulation order, providing no Transport format (Transport block) info. For the remaining 29 entries modulation order and Transport block size info are signalled. Further detailed information on the control information for uplink resource allocation on PUSCH can be found in TS36.212 section 5.3.3 and TS36.213 section 7.1.7

## Component Carrier Structure in LTE (Release 8)

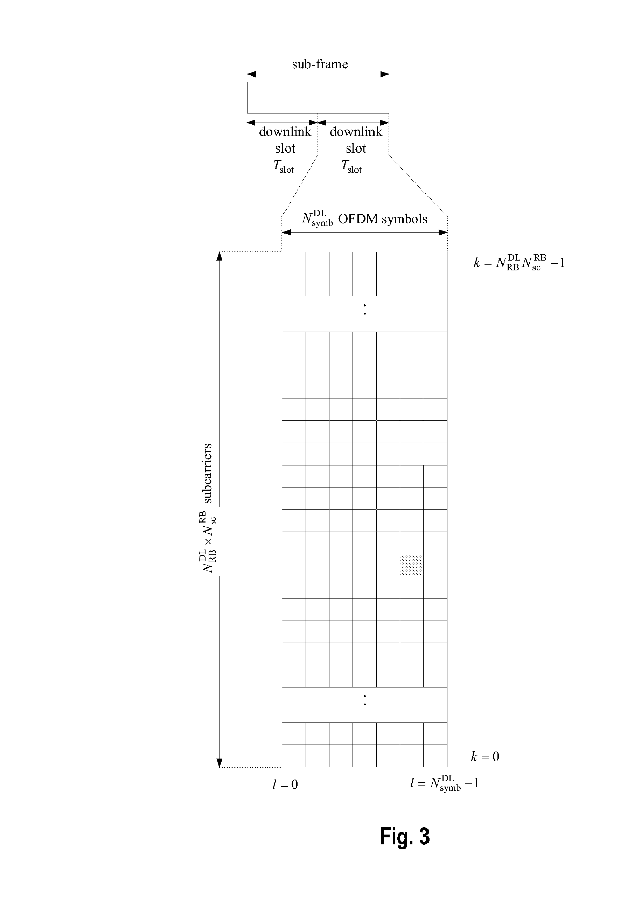

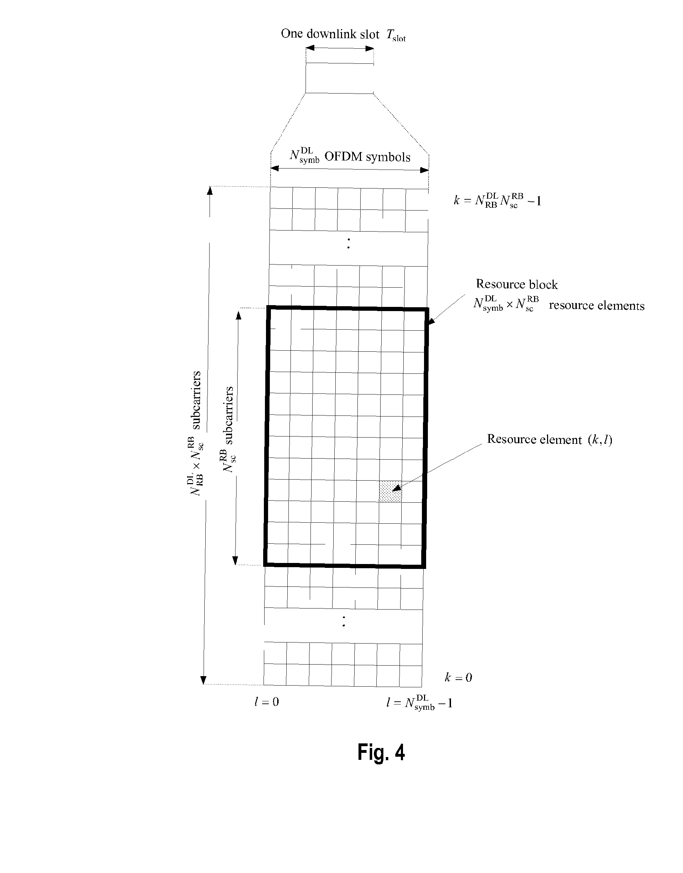

The downlink component carrier of a 3GPP LTE (Release 8) is subdivided in the time-frequency domain in so-called sub-frames. In 3GPP LTE (Release 8) each sub-frame is divided into two downlink slots as shown in Fig. 3, wherein the first downlink slot comprises the control channel region (PDCCH region) within the first OFDM symbols. Each sub-frame consists of a give number of OFDM symbols in the time domain (12 or 14 OFDM symbols in 3GPP LTE (Release 8)), wherein each of OFDM symbol spans over the entire bandwidth of the component carrier. The OFDM symbols thus each consists of a number of modulation symbols transmitted on respective $N_{RB}^{DL} \times N_{sc}^{RB}$ subcarriers as also shown in Fig. 4.

Assuming a multi-carrier communication system, e.g. employing OFDM, as for example used in 3GPP Long Term Evolution (LTE), the smallest unit of resources that can be assigned by the scheduler is one "resource block". A physical resource block is defined as $N_{symb}^{DL}$ consecutive OFDM symbols in the time domain and $N_{sc}^{RB}$ consecutive subcarriers in the frequency domain as exemplified in Fig. 4. In 3GPP LTE (Release 8), a physical resource block thus consists of $N_{symb}^{DL} \times N_{sc}^{RB}$ resource elements, corresponding to one slot in the time domain and 180 kHz in the frequency domain (for further details on the downlink resource grid, see for example 3GPP TS 36.211, "Evolved Universal Terrestrial Radio Access (E-UTRA); Physical Channels and Modulation (Release 8)", version 8.9.0 or 9.0.0, section 6.2, available at http://www.3gpp.org and incorporated herein by reference).

The term "component carrier" refers to a combination of several resource blocks. In future releases of LTE, the term "component carrier" is no longer used; instead, the terminology is changed to "cell", which refers to a combination of downlink and optionally uplink resources. The linking between the carrier frequency of the downlink resources and the carrier frequency of the uplink resources is indicated in the system information transmitted on the downlink resources.

## Further Advancements for LTE (LTE-A)

The frequency spectrum for IMT-Advanced was decided at the World Radiocommunication Conference 2007 (WRC-07). Although the overall frequency spectrum for IMT-Advanced was decided, the actual available frequency bandwidth is different according to each region or country. Following the decision on the available frequency spectrum outline, however, standardization of a radio interface started in the 3rd Generation Partnership Project (3GPP). At the 3GPP TSG RAN #39 meeting, the Study Item description on "Further Advancements for E-UTRA (LTE-Advanced)" was approved. The study item covers technology components to be considered for the evolution of E-UTRA, e.g. to fulfill the requirements on IMT-Advanced. Two major technology components which are currently under consideration for LTE-A are described in the following.

*Carrier Aggregation in LTE-A for support* of *wider bandwidth*

The bandwidth that the LTE-Advanced system is able to support is 100 MHz, while an LTE system can only support 20 MHz. Nowadays, the lack of radio spectrum has become a bottleneck of the development of wireless networks, and as a result it is difficult to find a spectrum band which is wide enough for the LTE-Advanced system. Consequently, it is urgent to find a way to gain a wider radio spectrum band, wherein a possible answer is the carrier aggregation functionality.

In carrier aggregation, two or more component carriers (component carriers) are aggregated in order to support wider transmission bandwidths up to 100MHz. Several cells in the LTE system are aggregated into one wider channel in the LTE-Advanced system which is wide enough for 100 MHz even though these cells in LTE are in different frequency bands.

All component carriers can be configured to be LTE Rel. 8/9 compatible, at least when the aggregated numbers of component carriers in the uplink and the downlink are the same. Not all component carriers aggregated by a user equipment may necessarily be Rel. 8/9 compatible. Existing mechanism (e.g. barring) may be used to avoid Rel-8/9 user equipments to camp on a component carrier.

A user equipment may simultaneously receive or transmit one or multiple component carriers (corresponding to multiple serving cells) depending on its capabilities. A LTE-A Rel. 10 user equipment with reception and/or transmission capabilities for carrier aggregation can simultaneously receive and/or transmit on multiple serving cells, whereas an LTE Rel. 8/9 user equipment can receive and transmit on a single serving cell only, provided that the structure of the component carrier follows the Rel. 8/9 specifications.

Carrier aggregation is supported for both contiguous and non-contiguous component carriers with each component carrier limited to a maximum of 110 Resource Blocks in the frequency domain using the Rel. 8/9 numerology. It is possible to configure a user equipment to aggregate a different number of component carriers originating from the same eNodeB and of possibly different bandwidths in the uplink and the downlink:

- The number of downlink component carriers that can be configured depends on the downlink aggregation capability of the user equipment;

- The number of uplink component carriers that can be configured depends on the uplink aggregation capability of the user equipment;

- It is not possible to configure a user equipment with more uplink component carriers than downlink component carriers;

- In typical TDD deployments, the number of component carriers and the bandwidth of each component carrier in uplink and downlink is the same.

Component carriers originating from the same eNodeB need not to provide the same coverage.

The spacing between centre frequencies of contiguously aggregated component carriers shall be a multiple of 300 kHz. This is in order to be compatible with the 100 kHz frequency raster of Rel. 8/9 and at the same time preserve orthogonality of the subcarriers with 15 kHz spacing. Depending on the aggregation scenario, the n x 300 kHz spacing can be facilitated by insertion of a low number of unused subcarriers between contiguous component carriers.

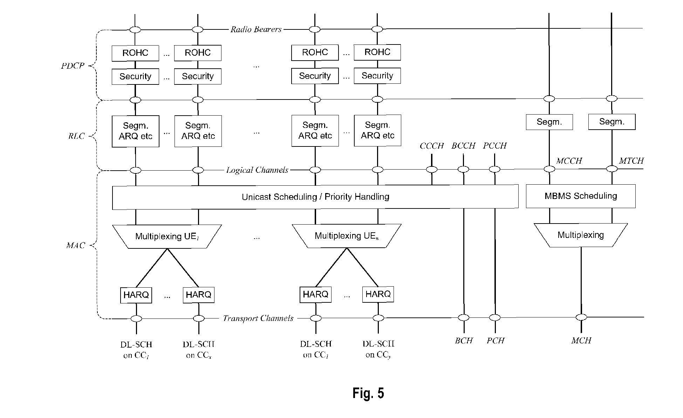

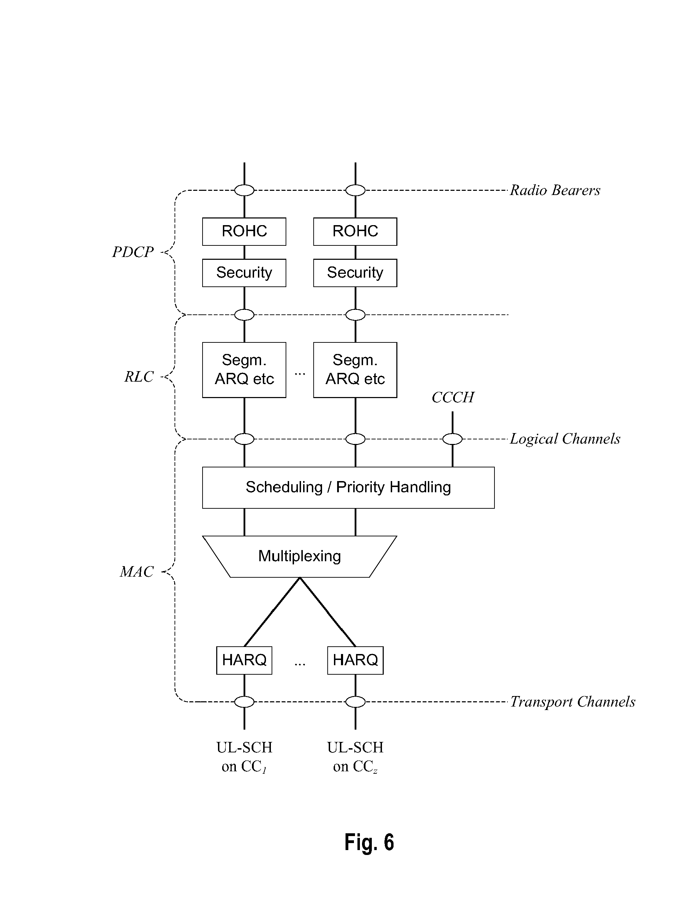

The nature of the aggregation of multiple carriers is only exposed up to the MAC layer. For both uplink and downlink there is one HARQ entity required in MAC for each aggregated component carrier. There is (in the absence of SU-MIMO - Single User Multiple Input Multiple Output - for uplink) at most one transport block per component carrier. A transport block and its potential HARQ retransmissions need to be mapped on the same component carrier. The Layer 2 structure with activated carrier aggregation is shown in Fig. 5 and Fig. 6 for the downlink and uplink respectively.

When carrier aggregation is configured, the user equipment only has one RRC connection with the network. At RRC connection establishment/re-establishment, one serving cell provides the security input (one ECGI, one PCI and one ARFCN) and the non-access stratum mobility information (e.g. TAI) similarly as in LTE Rel. 8/9. After RRC connection establishment/re-establishment, the component carrier corresponding to that cell is referred to as the downlink Primary Cell (PCell). There is always one and only one downlink PCell (DL PCell) and one uplink PCell (UL PCell) configured per user equipment in connected mode. In the downlink, the carrier corresponding to the PCell is the Downlink Primary Component Carrier (DL PCC), while in the uplink it is the Uplink Primary Component Carrier (UL PCC).

Depending on the user equipment's capabilities, Secondary Cells (SCells) can be configured to form a set of serving cells, together with the PCell. Therefore, the configured set of serving cells for a user equipment always consists of one PCell and one or more SCells. The characteristics of the downlink and uplink PCell and SCells are

- The uplink PCell is used for transmission of Layer 1 uplink control information (PUCCH)

- Unlike SCells, the downlink PCell cannot be de-activated

- Re-establishment is triggered when the downlink PCell experiences Rayleigh fading (RLF), not when downlink SCells experience RLF

- For each SCell the usage of uplink resources by the UE in addition to the downlink ones is configurable (the number of DL SCCs configured is therefore always larger or equal to the number of UL SCells and no SCell can be configured for usage of uplink resources only)

- From a UE viewpoint, each uplink resource only belongs to one serving cell

- PCell can only be changed with handover procedure (i.e. with security key change and RACH procedure)

- The number of serving cells that can be configured depends on the aggregation capability of the UE

- Non-access stratum information is taken from the downlink PCell.

The reconfiguration, addition and removal of SCells can be performed by RRC. At intra-LTE handover, RRC can also add, remove, or reconfigure SCells for usage with the target PCell. When adding a new SCell, dedicated RRC signaling is used for sending all required system information of the SCell, i.e. while in connected mode, user equipments need not acquire broadcast system information directly from the SCells.

When carrier aggregation is configured, a user equipment may be scheduled over multiple component carriers simultaneously, but at most one random access procedure should be ongoing at any time. Cross-carrier scheduling allows the Physical Downlink Control Channel (PDCCH) of a component carrier to schedule resources on another component carrier. For this purpose a component carrier identification field (CIF) is introduced in the respective Downlink Control Information (DCI) formats. A linking between uplink and downlink component carriers allows identifying the uplink component carrier for which the grant applies when there is no-cross-carrier scheduling. The linkage of downlink component carriers to uplink component carriers does not necessarily need to be one to one. In other words, more than one downlink component carrier can link to the same uplink component carrier. At the same time, a downlink component carrier can only link to one uplink component carrier.

**Activation/Deactivation of SCells**

To enable reasonable UE battery consumption when CA is configured, an activation/deactivation mechanism of SCells is supported (i.e. activation/deactivation does not apply to PCell). When an SCell is deactivated, the UE does not need to receive the corresponding PDCCH or PDSCH, cannot transmit in the corresponding uplink, nor is it required to perform CQI measurements. Conversely, when an SCell is active, the UE shall receive PDSCH and PDCCH (if the UE is configured to monitor PDCCH from this SCell), and is expected to be able to perform CQI measurements.

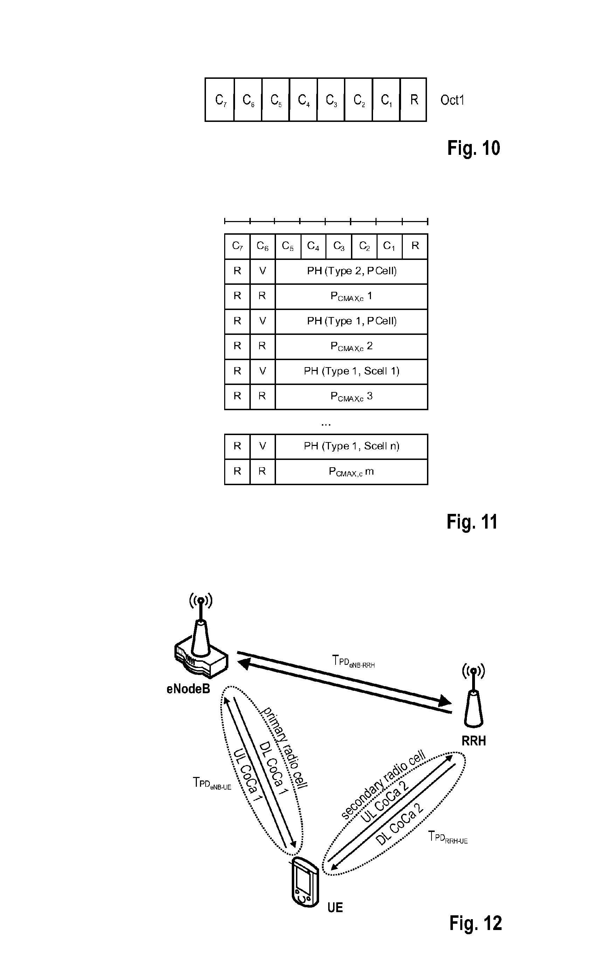

The activation/deactivation mechanism is based on the combination of a MAC control element and deactivation timers. The MAC control element carries a bitmap for the activation and deactivation of SCells: a bit set to 1 denotes activation of the corresponding SCell, while a bit set to 0 denotes deactivation. With the bitmap, SCells can be activated and deactivated individually, and a single activation/deactivation command can activate/deactivate a subset of the SCells. The corresponding activation/deactivation MAC CE is shown in Fig. 10. It should be noted, that even though there is a maxmimum of 4 SCells a UE can aggregate, the MAC CE contains 7 entries, each of them corresponding to an SCell configured with SCellIndex i.

One deactivation timer is maintained per SCell but one common value is configured per UE by RRC. At reconfiguration without mobility control information:

o SCells added to the set of serving cells are initially "deactivated";

o SCells which remain in the set of serving cells (either unchanged or reconfigured) do not change their activation status ("activated" or "deactivated").

At reconfiguration with mobility control information (i.e. handover):

o SCells are "deactivated".

**Uplink Access scheme for LTE**

For Uplink transmission, power-efficient user-terminal transmission is necessary to maximize coverage. Single-carrier transmission combined with FDMA with dynamic bandwidth allocation has been chosen as the evolved UTRA uplink transmission scheme. The main reason for the preference for single-carrier transmission is the lower peak-to-average power ratio (PAPR), compared to multi-carrier signals (OFDMA), and the corresponding improved power-amplifier efficiency and assumed improved coverage (higher data rates for a given terminal peak power). During each time interval, Node B assigns users a unique time/frequency resource for transmitting user data thereby ensuring intra-cell orthogonality. An orthogonal access in the uplink promises increased spectral efficiency by eliminating intra-cell interference. Interference due to multipath propagation is handled at the base station (Node B), aided by insertion of a cyclic prefix in the transmitted signal.

The basic physical resource used for data transmission consists of a frequency resource of size BWgrant during one time interval, e.g. a sub-frame of 0.5 ms, onto which coded information bits are mapped. It should be noted that a sub-frame, also referred to as transmission time interval (TTI), is the smallest time interval for user data transmission. It is however possible to assign a frequency resource BWgrant over a longer time period than one TTI to a user by concatenation of sub-frames.

**Uplink Scheduling Scheme for LTE**

The uplink scheme allows for both scheduled access, i.e. controlled by eNB, and contention-based access.

In case of scheduled access the UE is allocated a certain frequency resource for a certain time (i.e. a time/frequency resource) for uplink data transmission. However, some time/frequency resources can be allocated for contention-based access. Within these time/frequency resources, UEs can transmit without first being scheduled. One scenario where UE is making a contention-based access is for example the random access, i.e. when UE is performing initial access to a cell or for requesting uplink resources.

For the scheduled access Node B scheduler assigns a user a unique frequency/time resource for uplink data transmission. More specifically the scheduler determines

o which UE(s) that is (are) allowed to transmit,

o which physical channel resources (frequency),

o Transport format (Modulation Coding Scheme (MCS)) to be used by the mobile terminal for transmission

The allocation information is signalled to the UE via a scheduling grant, sent on the L1/L2 control channel. For simplicity reasons this channel is called uplink grant channel in the following. A scheduling grant message contains at least information which part of the frequency band the UE is allowed to use, the validity period of the grant, and the transport format the UE has to use for the upcoming uplink transmission. The shortest validity period is one sub-frame. Additional information may also be included in the grant message, depending on the selected scheme. Only "per UE" grants are used to grant the right to transmit on the UL-SCH (i.e. there are no "per UE per RB" grants). Therefore the UE needs to distribute the allocated resources among the radio bearers according to some rules, which will be explained in detail in the next section. Unlike in HSUPA there is no UE based transport format selection. The eNB decides the transport format based on some information, e.g. reported scheduling information and QoS info, and UE has to follow the selected transport format. In HSUPA Node B assigns the maximum uplink resource and UE selects accordingly the actual transport format for the data transmissions.

Since the scheduling of radio resources is the most important function in a shared channel access network for determining Quality of service, there are a number of requirements that should be fulfilled by the UL scheduling scheme for LTE in order to allow for an efficient QoS management.

o Starvation of low priority services should be avoided

o Clear QoS differentiation for radio bearers/services should be supported by the scheduling scheme

o The UL reporting should allow fine granular buffer reports (e.g. per radio bearer or per radio bearer group) in order to allow the eNB scheduler to identify for which Radio Bearer/service data is to be sent.

o It should be possible to make clear QoS differentiation between services of different users

o It should be possible to provide a minimum bit rate per radio bearer

As can be seen from above list one essential aspect of the LTE scheduling scheme is to provide mechanisms with which the operator can control the partitioning of its aggregated cell capacity between the radio bearers of the different QoS classes. The QoS class of a radio bearer is identified by the QoS profile of the corresponding SAE bearer signalled from AGW to eNB as described before. An operator can then allocate a certain amount of its aggregated cell capacity to the aggregated traffic associated with radio bearers of a certain QoS class. The main goal of employing this class-based approach is to be able to differentiate the treatment of packets depending on the QoS class they belong to.

**Uplink Power Control**

Uplink transmission power control in a mobile communication system serves an important purpose: it balances the need for sufficient transmitted energy per bit to achieve the required Quality-of-Service (QoS), against the needs to minimize interference to other users of the system and to maximize the battery life of the mobile terminal. In achieving this purpose, the role of the Power Control (PC) becomes decisive to provide the required SINR while controlling at the same time the interference caused to neighbouring cells. The idea of classic PC schemes in uplink is that all users are received with the same SINR, which is known as full compensation. As an alternative, 3GPP has adopted for LTE the use of Fractional Power Control (FPC). This new functionality makes users with a higher path-loss operate at a lower SINR requirement so that they will more likely generate less interference to neighbouring cells.

Detailed power control formulae are specified in LTE for the Physical Uplink Shared Channel (PUSCH), Physical Uplink Control Channel (PUCCH) and the Sounding Reference Signals (SRSs) (section 5.1 in TS36.213). The formula for each of these uplink signals follows the same basic principles; in all cases they can be considered as a summation of two main terms: a basic open-loop operating point derived from static or semi-static parameters signalled by the eNodeB, and a dynamic offset updated from subframe to subframe.

The basic open-loop operating point for the transmit power per resource block depends on a number of factors including the inter-cell interference and cell load. It can be further broken down into two components, a semi-static base level P0, further comprised of a common power level for all UEs in the cell (measured in dBm) and a UE-specific offset, and an open-loop path-loss compensation component. The dynamic offset part of the power per resource block can also be further broken down into two components, a component dependent on the MCS and explicit Transmitter Power Control (TPC) commands.

The MCS-dependent component (referred to in the LTE specifications as $\Delta_{TF}$, where TF stands for Transport Format') allows the transmitted power per RB to be adapted according to the transmitted information data rate.

The other component of the dynamic offset is the UE-specific TPC commands. These can operate in two different modes: accumulative TPC commands (available for PUSCH, PUCCH and SRS) and absolute TPC commands (available for PUSCH only). For the PUSCH, the switch between these two modes is configured semi-statically for each UE by RRC signalling - i.e. the mode cannot be changed dynamically. With the accumulative TPC commands, each TPC command signals a power step relative to the previous level.

The formula below shows the UE transmit power, expressed in dBm, for PUSCH:

$$P = \min\left[P_{MAX}, 10 \cdot \log_{10} M + P_{0\_PUSCH} + \alpha \cdot PL + \Delta_{MCS} + f(\Delta_i)\right] \text{ dBm}]$$

o PMAX is the maximum UE power which depends on the UE class.

o M is the number of allocated physical resource blocks (PRBs).

o PL is the UE path loss derived at the UE based on RSRP measurement and signalled RS eNode-B transmission power.

o $\Delta_{MCS}$ is an MCS-dependent power offset set by the eNB.

o $P_{0\_PUSCH}$ is a UE-specific parameter (partially broadcasted and partially signalled using RRC).

o $\alpha$ is cell-specific parameter (broadcasted on BCH).

o $\Delta_i$ are closed loop PC commands signalled from the eNode-B to the UE

o function f ( ) indicates whether closed loop commands are relative accumulative or absolute. f ( ) is signalled to the UE via higher layers.

**Uplink Power Control for Carrier Aggregation**

One main point of UL Power control for LTE-Advance is that a component carrier specific UL power control is supported, i.e. there will be one independent power control loop for each UL component carrier configured for the UE. Furthermore power headroom is reported per component carrier.

In Rel-10 within the scope of carrier aggregation there are two maximum power limits, a maximum total UE transmit power and a CC-specific maximum transmit power. RAN1 agreed at the RAN1#60bis meeting that a power headroom report, which is reported per CC, accounts for the maximum power reduction (MPR). In other words the power reduction applied by the UE is taken into account in the CC-specific maximum transmission power $P_{CMAX,c}$ (c denotes the component carrier).

Different to Rel-8/9, for LTE-A the UE has also to cope with simultaneous PUSCH-PUCCH transmission, multi-cluster scheduling and simultaneous transmission on multiple CCs, which requires larger MPR values and also causes a larger variation of the applied MPR values compared to Rel-8/9.

It should be noted that the eNB does not have knowledge of the power reduction applied by the UE on each CC, since the actual power reduction depends on the type of allocation, the standardized MPR value and also on the UE implementation. Therefore eNB doesn't know the CC-specific maximum transmission power relative to which the UE calculates the PHR. In Rel-8/9 for example UE's maximum transmit power Pcmax can be within some certain range as described above.

$$P_{CMAX\_L} \leq P_{CMAX} \leq P_{CMAX\_H}$$

Due to the fact that the power reduction applied by the UE to the maximum transmit power of a CC is not known by eNB it was agreed to introduce in Rel-10 a new power headroom MAC control element, which is also referred to as extenced power headroom MAC control element. The main difference to the Rel-8/9 PHR MAC CE format, is that it includes a Rel-8/9 power headroom value for each activated UL CC and is hence of variable size. Furthermore it not only reports the power headroom value for a CC but also the corresponding Pcmax,c (maximum transmit power of CC with the index c) value. In order to account for simultaneous PUSCH-PUCCH transmissions, UE reports for PCell the Rel-8/9 power headroom value which is related to PUSCH only transmissions (referred to type 1 power headroom) and if the UE is configured for simultaneous PUSCH-PUCCH transmission, a further Power headroom value, which considers PUCCH and PUSCH transmissions, also referred to as type 2 power headroom (see Fig. 11). Further details of the extended power headroom MAC Control element can be found in section 6.1.3.6a of TS36.321.

If the total transmit power of the UE, i.e. sum of transmission power on all CCs, would exceed the maximum UE transmit power $\hat{P}_{CMAX}(i)$, the UE needs to scale down uplink transmission power on PUSCH/PUCCH. There are certain rules for the prioritization of the uplink channels during power scaling defined. Basically control information transmitted on the PUCCH has the highest priority, i.e. PUSCH transmissions are scaled down first before PUCCH transmission power is reduced. This can be also expressed by the following condition which needs to be fulfilled:

$$\sum_{c} w(i) \cdot \hat{P}_{PUSCH,c}(i) \leq \left( \hat{P}_{CMAX}(i) - \hat{P}_{PUCCH}(i) \right)$$

where $\hat{P}_{PUCCH}(i)$ is the linear value of $P_{PUCCH}(i)$ (PUCCH transmission power in subframe i), $\hat{P}_{PUSCH,c}(i)$ is the linear value of $P_{PUSCH,c}(i)$ (PUSCH transmission power on carrier c in subframe i), $\hat{P}_{CMAX}(i)$ is the linear value of the UE total configured maximum output power $P_{CMAX}$ in subframe $i$ and $w(i)$ is a scaling factor of $\hat{P}_{PUSCH,c}(i)$ for serving cell $c$ where $0 \leq w(i) \leq 1$. In case there is no PUCCH transmission in subframe $i$, $\hat{P}_{PUCCH}(i)=0$.

For the case that the UE has PUSCH transmission with Uplink control information (UCI) on serving cell $j$ and PUSCH without UCI in any of the remaining serving cells, and the total transmit power of the UE would exceed $\hat{P}_{CMAX}(i)$, the UE scales $\hat{P}_{PUSCH,c}(i)$ for the serving cells without UCI in subframe $i$ such that the condition

$$\sum_{c \neq j} w(i) \cdot \hat{P}_{PUSCH,c}(i) \leq \left( \hat{P}_{CMAX}(i) - \hat{P}_{PUSCH,j}(i) \right)$$

is satisfied where $\hat{P}_{\text{PUSCH},j}(i)$ is the PUSCH transmit power for the cell with UCI and $w(i)$ is a scaling factor of $\hat{P}_{\text{PUSCH},c}$ (i) for serving cell $c$ without UCI. In this case, no power scaling is applied to $\hat{P}_{\text{PUSCH},j}(i)$ unless $\sum_{c \neq j} w(i) \cdot \hat{P}_{\text{PUSCH},c}(i) = 0$ and the total transmit power of the UE still would exceed $\hat{P}_{CMAX}(i)$. Note that $w(i)$ values are the same across serving cells when $w(i) > 0$ but for certain serving cells $w(i)$ may be zero.

If the UE has simultaneous PUCCH and PUSCH transmission with UCI on serving cell j and PUSCH transmission without UCI in any of the remaining serving cells, and the total transmit power of the UE would exceed $\hat{P}_{CMAX}(i)$, the UE obtains $\hat{P}_{\text{PUSCH},c}(i)$ according to

$$\hat{P}_{\text{PUSCH},j}(i) = \min\left(\hat{P}_{\text{PUSCH},j}(i), \left(\hat{P}_{\text{CMAX}}(i) - \hat{P}_{\text{PUCCH}}(i)\right)\right)$$

and

$$\sum_{c \neq j} w(i) \cdot \hat{P}_{\text{PUSCH},c}(i) \leq \left(\hat{P}_{\text{CMAX}}(i) - \hat{P}_{\text{PUCCH}}(i) - \hat{P}_{\text{PUSCH},j}(i)\right)$$

## Timing Advance

For the uplink transmission scheme of 3GPP LTE single-carrier frequency division multiple access (SC-FDMA) was chosen to achieve an orthogonal multiple-access in time and frequency between the different user equipments transmitting in the uplink.

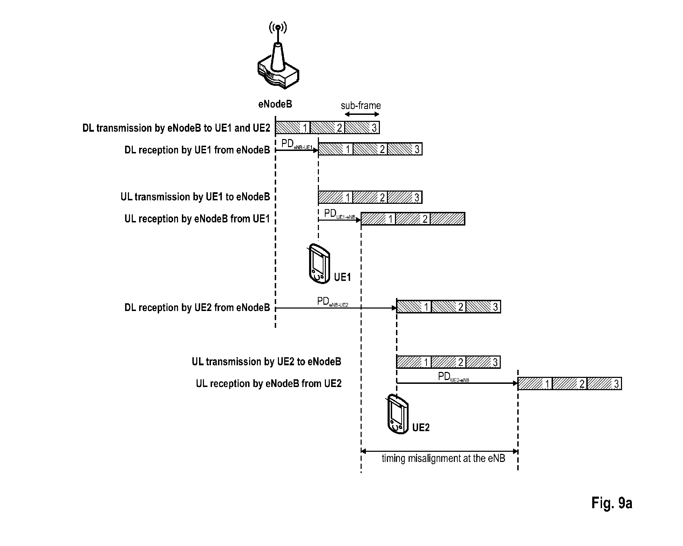

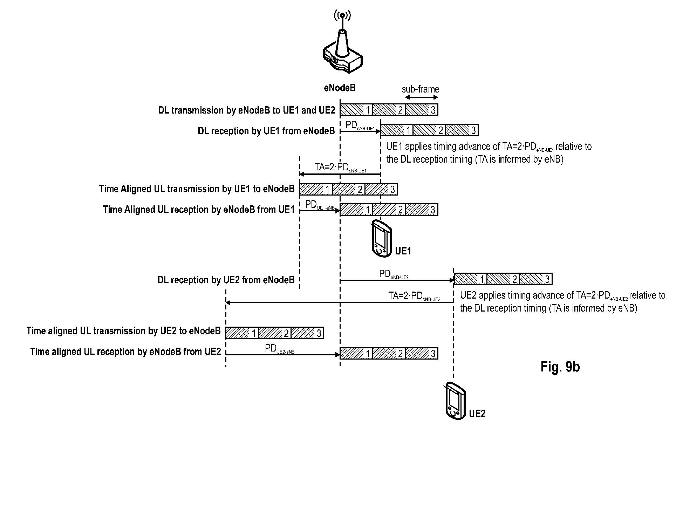

Uplink orthogonality is maintained by ensuring that the transmissions from different user equipments in a cell are time-aligned at the receiver of the eNodeB. This avoids intra-cell interference occurring, both between user equipments assigned to transmit in consecutive sub-frames and between user equipments transmitting on adjacent subcarriers. Time alignment of the uplink transmissions is achieved by applying a timing advance at the user equipment's transmitter, relative to the received downlink timing as exemplified in Fig. 9a and 9b. The main role of this is to counteract differing propagation delays between different user equipments.

Fig. 9a illustrates the misalignment of the uplink transmissions from two mobile terminals in case no uplink timing alignments is performed, such that the eNodeB receives the respective uplink transmissions from the two mobile terminals at different timings.

Fig. 9b in contrast thereto illustrates synchronized uplink transmissions for two mobile terminals. The uplink timing alignment is performed by each mobile terminal and applied to the uplink transmissions such that at the eNodeB the uplink transmissions from the two mobile terminals arrive at substantially the same timing.

*Initial Timing Advance Procedure*

When user equipment is synchronized to the downlink transmissions received from eNodeB, the initial timing advance is set by means of the random access procedure as described below. The user equipment transmits a random access preamble based on which the eNodeB can estimate the uplink timing. The eNodeB responds with an 11-bit initial timing advance command contained within the Random Access Response (RAR) message. This allows the timing advance to be configured by the eNodeB with a granularity of 0.52 $\mu$s from 0 up to a maximum of 0.67 ms.

Additional information on the control of the uplink timing and timing advance on 3GPP LTE (Release 8/9) can be found in chapter 20.2 of Stefania Sesia, Issam Toufik and Matthew Baker, "LTE - The UMTS Long Term Evolution: From Theory to Practice", John Wiley & Sons, Ltd. 2009, which is incorporated herein by reference.

*Updates of the Timing Advance*

Once the timing advance has been first set for each user equipment, the timing advance is updated from time to time to counteract changes in the arrival time of the uplink signals at the eNodeB. In deriving the timing advance update commands, the eNodeB may measure any uplink signal which is useful. The details of the uplink timing measurements at the eNodeB are not specified, but left to the implementation of the eNodeB.

The timing advance update commands are generated at the Medium Access Control (MAC) layer in the eNodeB and transmitted to the user equipment as MAC control elements which may be multiplexed together with data on the Physical Downlink Shared Channel (PDSCH). Like the initial timing advance command in the response to the Random Access Channel (RACH) preamble, the update commands have a granularity of 0.52 $\mu$s. The range of the update commands is $\pm$16 $\mu$s, allowing a step change in uplink timing equivalent to the length of the extended cyclic prefix. They would typically not be sent more frequently than about every 2 seconds. In practice, fast updates are unlikely to be necessary, as even for a user equipment moving at 500 km/h the change in round-trip path length is not more than 278 m/s, corresponding to a change in round-trip time of 0.93 $\mu$s/s.

The eNodeB balances the overhead of sending regular timing update commands to all the UEs in the cell against a UE's ability to transmit quickly when data arrives in its transmit buffer. The eNodeB therefore configures a timer for each user equipment, which the user equipment restarts each time a timing advance update is received. In case the user equipment does not receive another timing advance update before the timer expires, it must then consider that it has lost uplink synchronization (see also section 5.2 of 3GPP TS 36.321, "Evolved Universal Terrestrial Radio Access (E-UTRA); Medium Access Control (MAC) protocol specification", version 10.2.0, available at http://www.3gpp.org and incorporated herein by reference).

In such a case, in order to avoid the risk of generating interference to uplink transmissions from other user equipments, the UE is not permitted to make uplink transmissions of any sort (except the transmission of a random access preamble) and needs to revert to the initial timing alignment procedure in order to restore the uplink timing.

Upon reception of a timing advance command, the user equipment shall adjust its uplink transmission timing for PUCCH/PUSCH/SRS of the primary cell. The timing advance command indicates the change of the uplink timing relative to the current uplink timing as multiples of 16 $T_s$.

**Random Access Procedure**

A mobile terminal in LTE can only be scheduled for uplink transmission, if its uplink transmission is time synchronized. Therefore the Random Access (RACH) procedure plays an important role as an interface between non-synchronized mobile terminals (UEs) and the orthogonal transmission of the uplink radio access.

Essentially the Random Access in LTE is used to achieve uplink time synchronization for a user equipment which either has not yet acquired, or has lost, its uplink synchronization. Once a user equipment has achieved uplink synchronization, the eNodeB can schedule uplink transmission resources for it. The following scenarios are therefore relevant for random access:

- A user equipment in RRC_CONNECTED state, but not uplink-synchronized, wishing to send new uplink data or control information

- A user equipment in RRC_CONNECTED state, but not uplink-synchronized, required to receive downlink data, and therefore to transmit corresponding HARQ feedback, i.e. ACK/NACK, in the uplink. This scenario is also referred to as Downlink data arrival

- A user equipment in RRC_CONNECTED state, handing over from its current serving cell to a new target cell; in order to achieve uplink time-synchronization in the target cell, Random Access procedure is performed

- A transition from RRC_IDLE state to RRC_CONNECTED, for example for initial access or tracking area updates

- Recovering from radio link failure, i.e. RRC connection re-establishment

There is one more additional case, where user equipment performs random access procedure, even though user equipment is time-synchronized. In this scenario the user equipment uses the random access procedure in order to send a scheduling request, i.e. uplink buffer status report, to its eNodeB, in case it does not have any other uplink resource allocated in which to send the scheduling request, i.e. dedicated scheduling request (D-SR) channel is not configured.

LTE offers two types of random access procedures allowing access to be either contention based, i.e. implying an inherent risk of collision, or contention-free (non-contention based). It should be noted that contention-based random access can be applied for all six scenarios listed above, whereas a non-contention based random access procedure can only be applied for the downlink data arrival and handover scenario.

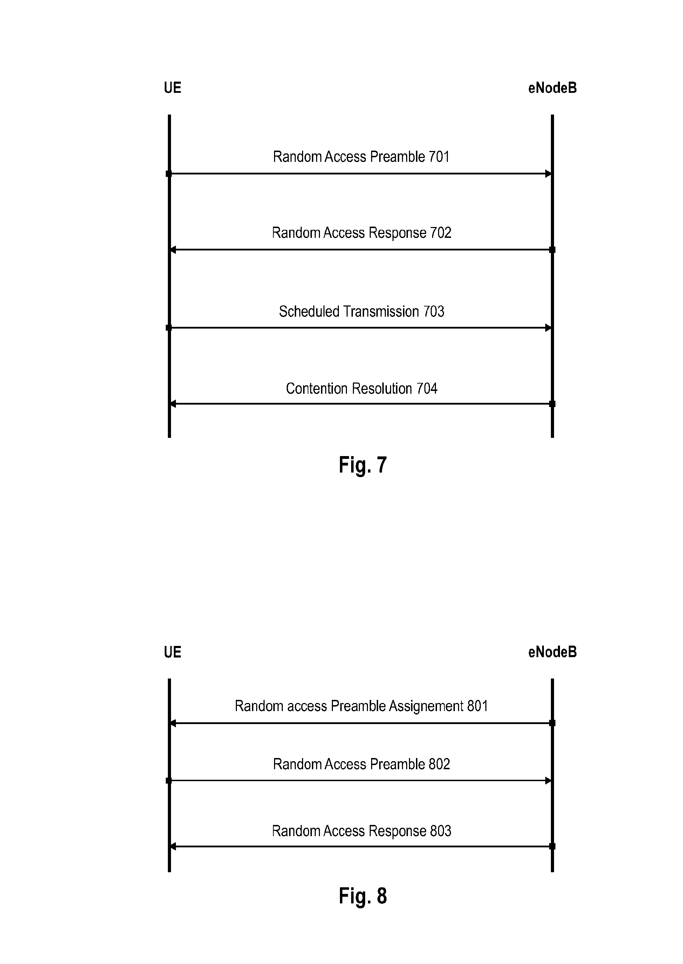

In the following the contention based random access procedure is being described in more detail with respect to Fig. 7. A detailed description of the random access procedure can be also found in 3GPP 36.321, section 5.1.

Fig. 7 shows the contention based RACH procedure of LTE. This procedure consists of four "steps". First, the user equipment transmits 701 a random access preamble on the Physical Random Access Channel (PRACH) to the eNodeB. The preamble is selected by user equipment from the set of available random access preambles reserved by eNodeB for contention based access. In LTE, there are 64 preambles per cell which can be used for contention-free as well as contention based random access. The set of contention based preambles can be further subdivided into two groups, so that the choice of preamble can carry one bit of information to indicate information relating to the amount of transmission resources needed for the first scheduled transmission, which is referred to as msg3 in TS36.321 (see step 703). The system information broadcasted in the cell contain the information which signatures (preambles) are in each of the two subgroups as well as the meaning of each subgroup. The user equipment randomly selects one preamble from the subgroup corresponding to the size of transmission resource needed for message 3 transmission.

After eNodeB has detected a RACH preamble, it sends 702 a Random Access Response (RAR) message on the PDSCH (Physical Downlink Shared Channel) addressed on the PDCCH with the (Random Access) RA-RNTI identifying the time-frequency slot in which the preamble was detected. If multiple user equipments transmitted the same RACH preamble in the same PRACH resource, which is also referred to as collision, they would receive the same random access response.

The RAR message conveys the detected RACH preamble, a timing alignment command (TA command) for synchronization of subsequent uplink transmissions, an initial uplink resource assignment (grant) for the transmission of the first scheduled transmission (see step 703) and an assignment of a Temporary Cell Radio Network Temporary Identifier (T-CRNTI). This T-CRNTI is used by eNodeB in order to address the mobile(s) whose RACH preamble were detected until RACH procedure is finished, since the "real" identity of the mobile is at this point not yet known by eNodeB.

Furthermore the RAR message can also contain a so-called back-off indicator, which the eNodeB can set to instruct the user equipment to back off for a period of time before retrying a random access attempt. The user equipment monitors the PDCCH for reception of random access response within a given time window, which is configured by the eNodeB. In case user equipment doesn't receive a random access response within the configured time window, it retransmits the preamble at the next PRACH opportunity considering a potentially back off period.

In response to the RAR message received from the eNodeB, the user equipment transmits 703 the first scheduled uplink transmission on the resources assigned by the grant within the random access response. This scheduled uplink transmission conveys the actual random access procedure message like for example RRC connection request, tracking area update or buffer status report. Furthermore it includes either the C-RNTI for user equipments in RRC_ CONNECTED mode or the unique 48-bit user equipment identity if the user equipments are in RRC_IDLE mode. In case of a preamble collision having occurred in step 701, i.e. multiple user equipments have sent the same preamble on the same PRACH resource, the colliding user equipments will receive the same T-CRNTI within the random access response and will also collide in the same uplink resources when transmitting 703 their scheduled transmission. This may result in interference that no transmission from a colliding user equipment can be decoded at the eNodeB, and the user equipments will restart the random access procedure after having reached maximum number of retransmission for their scheduled transmission. In case the scheduled transmission from one user equipment is successfully decoded by eNodeB, the contention remains unsolved for the other user equipments.

For resolution of this type of contention, the eNode B sends 704 a contention resolution message addressed to the C-RNTI or Temporary C-RNTI, and, in the latter case, echoes the 48-bit user equipment identity contained the scheduled transmission of step 703. It supports HARQ. In case of collision followed by a successful decoding of the message sent in step 703, the HARQ feedback (ACK) is only transmitted by the user equipment which detects its own identity, either C-RNTI or unique user equipment ID. Other UEs understand that there was a collision at step 1 and can quickly exit the current RACH procedure and start another one.

Fig. 8 is illustrating the contention-free random access procedure of 3GPP LTE Rel. 8/9. In comparison to the contention based random access procedure, the contention-free random access procedure is simplified. The eNodeB provides 801 the user equipment with the preamble to use for random access so that there is no risk of collisions, i.e. multiple user equipment transmitting the same preamble. Accordingly, the user equipment is sending 802 the preamble which was signaled by eNodeB in the uplink on a PRACH resource. Since the case that multiple UEs are sending the same preamble is avoided for a contention-free random access, no contention resolution is necessary, which in turn implies that step 704 of the contention based procedure shown in Fig. 7 can be omitted. Essentially a contention-free random access procedure is finished after having successfully received the random access response.

When carrier aggregation is configured, the first three steps of the contention-based random access procedure occur on the PCell, while contention resolution (step 704) can be cross-scheduled by the PCell.

The initial preamble transmission power setting is based on an open-loop estimation with full compensation of the path loss. This is designed to ensure that the received power of the preambles is independent of the path-loss.

The eNB may also configure an additional power offset, depending for example on the desired received SINR, the measured uplink interference and noise level in the time-frequency slots allocated to RACH preambles, and possibly on the preamble format. Furthermore, the eNB may configure preamble power ramping so that the transmission for each retransmitted preamble, i.e. in case the PRACH transmission attempt was not successfully, is increased by a fixed step.

The PRACH power is determined by UE through evaluation of

$$PPRACH = min\{ P_{CMAX,c}(i), PREAMBLE\_RECEIVED\_TARGET\_POWER + PL_c\}[dBm],$$

where $P_{CMAX,c}(i)$ is the configured maximum UE transmit power for subframe i of the primary cell and $PL_c$ is the downlink pathloss estimate calculated in the UE for the primary cell. PREAMBLE_RECEIVED_TARGET_POWER is set to:

$$preambleInitialReceivedTargetPower + DELTA\_PREAMBLE +$$
$$(PREAMBLE\_TRANSMISSION\_COUNTER - 1) * powerRampingStep.$$

**Timing Advance and Component Carrier Aggregation in the Uplink**

In current specifications of the 3GPP standards the user equipment only maintains one timing advance value and applies this to uplink transmissions on all aggregated component carriers. At the moment, aggregation of cells within the same frequency band is supported, so called intra-frequency carrier aggregation. In particular, uplink timing synchronization is performed for PCell, e.g. by RACH procedure on PCell, and then the user equipment uses the same uplink timing for uplink transmissions on aggregated SCells. A single timing advance for all aggregated uplink component carriers is regarded as sufficient, since current specifications up to 3GPP LTE-A Rel. 10 support only carrier aggregation of carriers from the same frequency band.

However, in the future, e.g. future Release 11, it will be possible to aggregate uplink component carriers from different frequency bands, in which case they can experience different channel, interference and coverage characteristics.

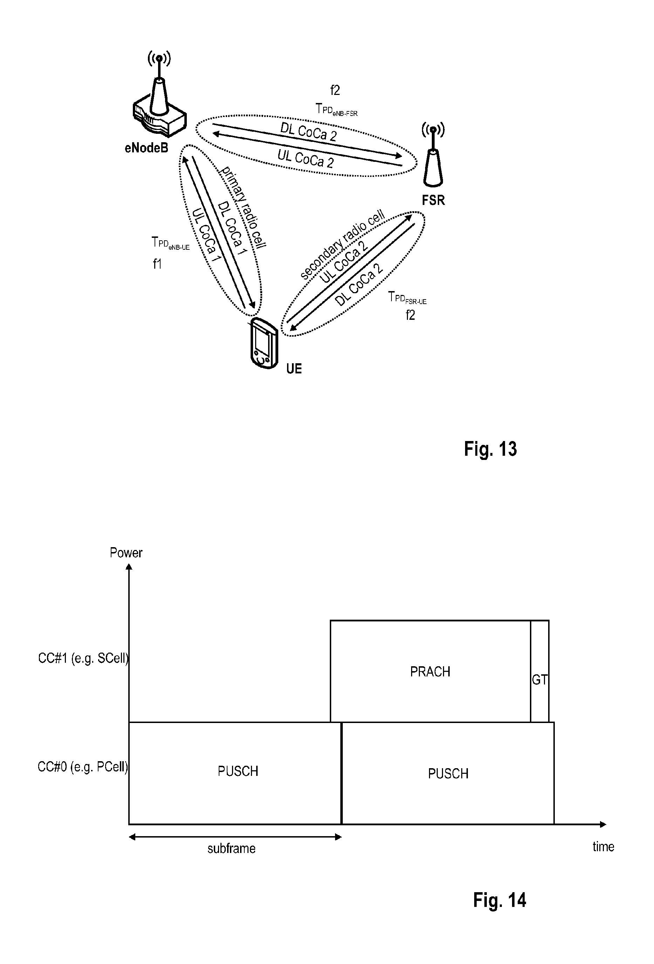

Furthermore the deployment of technologies like Remote Radio Heads (RRH) as shown for example in Fig. 12 or Frequency Selective Repeaters (FSR) as shown for example in Fig. 13 will also cause different interference and propagation scenarios for the aggregated component carriers. For instance, Fig. 13 illustrates how the FSR relays signals of only frequency f2 relating to the component carrier 2 (CoCa2); signals of frequency f1 are not transmitted/received by the FSR. Consequently, when assuming that the signal strength of the signal from the FSR is greater than the one of the eNodeB (not schown), the component carrier 2 will be received by the user equipment via the frequency-selective repeater, whereas the UE receives the component carrier 1 (CoCa1) directly from the eNodeB. This leads to different propagation delays between the two component carriers.

Therefore, there is a need of introducing more than one timing advance within one user equipments, i.e. separate timing advance may be required for certain component carriers (Serving Cells).

One obvious solution is to perform a RACH procedure also on each of the SCells that requires a different timing advance to achieve uplink synchronization, in a similar way to the PCell. Performing a RACH procedure on an SCell however would result in various disadvantages.

As an immediate consequence, the user equipment would be required to implement the protocol parts of the random access procedure for an aggregated SCell, which affects the Physical Layer, MAC Layer as well as the RRC Layers, hence increasing the UE complexity.

Furthermore, the power control/power allocation procedure is also complicated when considering simultaneous transmission of the PRACH and the PUSCH/PUCCH in one subframe, i.e. TTI. This might be the case where the uplink of the user equipment is out of synchronization on one component carrier, e.g. SCell, while still being uplink synchronized on another uplink component carrier, e.g. PCell. In order to regain uplink synchronization for the SCell, the user equipment makes a RACH access, e.g. ordered by PDCCH. Consequently, the user equipment transmits a RACH preamble, i.e. performs a PRACH transmission, and in the same TTI the user equipment also transmits PUSCH and/or PUCCH.

Currently, the power control loops for PUSCH/PUCCH and PRACH are totally independent, i.e. PRACH power is not considered when determining PUSCH/PUCCH power, and vice versa. In order to deal with simultaneous PRACH and PUSCH/PUCCH transmissions, changes to the uplink power control algorithm are required. For instance, it would be necessary to consider the PRACH transmission when power scaling needs to be used due to power limitation, since up to now only PUCCH, PUSCH with multiplexed uplink control information (UCI) and PUSCH without UCI are considered for the power limitation case. PUCCH is given the highest priority over PUSCH, and the PUSCH with multiplexed UCI is considered to have a higher priority over PUSCH without UCI.

PUCCH > PUSCH w UCI > PUSCH w/o UCI

The prioritization rules for the power limitation case which are listed in the chapter relating to the Uplink Power Control would have to be extended by PRACH transmissions. However, there is no easy straightforward solution in said respect, since on the one hand uplink control information transmitted on PUCCH or PUSCH have a high priority in order to allow for proper system operation, whereas on the other hand PRACH should be also prioritized in order to ensure a high detection probability at the eNB in order to minimize the delay incurred by the RACH procedure.

In addition to the power control aspects, there is also a further disadvantage regarding the power amplifier that would have to deal with the simultaneous PRACH and PUSCH/PUCCH transmissions. There are certain differences in the uplink timing between the PRACH and the PUSCH/PUCCH, e.g. the timing advance for PRACH is 0; Guard Time, GT, which is in the range of $96.88\mu s$ to $715.63\mu s$. This is depicted in Fig. 14 showing PUSCH transmissions on component carrier 0, and a corresponding PRACH transmission on component carrier 1. As apparent, the PRACH transmission is not time aligned with the PUSCH transmissions as regards the subframe.

Therefore, there are power fluctuations within one subframe, which is undesirable. These power transients will add extra complexity to the implementation of the user equipment; in other words, the maximum power reduction needs to also change during one subframe in order to fulfill the EMC requirements.

SUMMARY OF THE INVENTION

The present invention strives to avoid the various disadvantages mentioned above.

One object of the invention is to propose a mechanism for aligning the timing of uplink transmissions on the uplink of serving cells, where different propagation delays are imposed on the transmissions on the serving cells . Another object of the invention is to suggest a mechanism for allowing a mobile terminal to perform time alignment for the uplink of serving cells , without performing a random access procedure.

The object is solved by the subject matter of the independent claims. Advantageous embodiments are subject to the dependent claims.

According to a first aspect, the invention allows time-aligning the uplink transmissions for a non-time~aligned uplink cell (termed in the following target cell) relative to a reference cell, which is already time-aligned and controlled by the same or a different aggregation access point as the target cell. It is assumed that at least one existing cell is already time-aligned and serves as reference cell for the time-aligning procedure of the invention. Advantageously, instead of performing a RACH procedure on the target cell for time-aligning, the present invention provides a different approach in this respect.

In more detail, the mobile terminal assists in the calculation of the timing advance value for the time-aligning of the non-time-aligned uplink target cell by measuring particular timing difference information and reporting the measurement results to the aggregation access point. The particular timing difference information which is measured by the mobile terminal is such that the aggregation access point, when receiving said information, can infer the necessary uplink timing alignment to be used by the mobile terminal with for the target cell.

The aggregation access point then calculates information on the necessary uplink timing alignment to be used by the mobile terminal for time-aligning the target cell in relation to the reference cell which is already time-aligned. For the calculation of the timing advance the aggregation access point uses at least the measurements received from the mobile terminal and the timing advance of the reference cell.

Subsequently, the aggregation access point transmits a timing advance command to the mobile terminal, and the mobile terminal in turn uses the received information of the timing advance command to time-align the uplink transmissions for the target cell.

The timing advance command may include information relating to the absolute timing advance value for the target cell or a relative timing advance value, relative to the timing advance value of the reference cell (value which the mobile terminal knows). In any case, the mobile terminal is able to adjust the transmission timing of its uplink transmissions on the uplink of the target cell according to the received timing advance command such that uplink transmissions transmitted from the mobile terminal to the aggregation access point on the target cell arrive synchronized at the aggregation access point.

The present invention provides a method for time aligning uplink transmissions by a mobile terminal in a mobile communication system. The mobile terminal is in communication with an aggregation access point and configured with a time-aligned uplink reference cell and with a non~time~aligned uplink target cell. The mobile terminal measures transmission and/or reception time difference information relating to transmissions on the target cell and/or the reference cell. The measurement results are transmitted from the mobile terminal to the aggregation access point. The aggregation access point determines a target timing advance based on at least the received measurement results and on a reference timing advance used for uplink transmissions on the time-aligned reference cell. The aggregation access point transmits the target timing advance to the mobile terminal. The mobile terminal time-aligns the uplink target cell by adjusting the timing of uplink transmissions on the uplink target cell based on the target timing advance received from the aggregation access point.

According to an advantageous embodiment of the invention which can be used in addition or alternatively to the above, the reference cell is initially time-aligned by performing a random access procedure between the mobile terminal and the aggregation access point on the reference cell.

According to an advantageous embodiment of the invention which can be used in addition or alternatively to the above, the step of measuring by the mobile terminal comprises determining by the mobile terminal a downlink reception time difference ($\Delta_{Scell - PCell}R_{XDL}$) between the target and reference cell, by measuring the time between the beginning of a first downlink subframe on the target cell ($T_{DL\_RX\_SCell}$) and the beginning of the corresponding downlink subframe on the reference cell ($T_{DL\_RX\_PCell}$), wherein downlink subframes on the reference and target cell refer to the same subframe number. Optionally, the measurement results, transmitted to the aggregation access point, comprise the downlink reception time difference between the target and reference cell.

According to an advantageous embodiment of the invention which can be used in addition or alternatively to the above, the step of measuring by the mobile terminal further comprises determining by the mobile terminal a reception transmission time difference between the target and reference cell ($\Delta_{Scell - PCell}R_{XDL} - T_{XUL}$), by measuring the time difference between the time when the mobile terminal transmits an uplink radio frame on the reference cell ($T_{UL-TX-PCell}$) and the time when the mobile terminal receives a downlink radio frame on the target cell ($T_{DL\_RX\_SCell}$), wherein the uplink radio frame and and the downlink radio frame relate to the same radio frame. Optionally, the measurement results, transmitted to the aggregation access point, comprise the reception transmission time difference between the target and reference cell.

According to an advantageous embodiment of the invention which can be used in addition or alternatively to the above, the step of determining the target timing advance further comprises the step of determining a downlink reception time difference between the target cell and the reference cell ($\Delta_{Scell - PCell}R_{XDL}$) by subtracting the reception transmission time difference from the timing advance of the reference cell.

According to an advantageous embodiment of the invention which can be used in addition or alternatively to the above, the step of determining the target timing advance is based on the downlink reception time difference.

According to an advantageous embodiment of the invention which can be used in addition or alternatively to the above, the step of determining the target timing advance is further based on a downlink transmission time difference ($\Delta_{Scell - PCell}T_{XDL}$) between the target cell and the reference cell. The downlink transmission time difference between the target cell and the reference cell is the time difference between the beginning of a downlink subframe on the reference cell ($T_{DL\_TX\_PCell}$) and the beginning of the corresponding downlink subframe on the target cell ($T_{DL\_TX\_SCell}$), wherein the downlink subframes refer to the same subframe number.

According to an advantageous embodiment of the invention which can be used in addition or alternatively to the above, the step of time-aligning the target cell comprises setting the transmission of uplink radio frames on the uplink target cell relative to the beginning of downlink radio frames received via the downlink target cell, using the target timing advance determined by the aggregation access point considering that the setting of the transmission of the uplink radio frames on the uplink target cell will be relative to the beginning of downlink radio frames received via the downlink target cell, respectively. Alternatively, the step of time-aligning the target cell comprises setting the transmission of uplink radio frames on the uplink target cell relative to the beginning of downlink radio frames received via the downlink reference cell, using the target timing advance determined by the aggregation access point considering that the setting of the transmission of the uplink radio frames on the uplink target cell will be relative to the beginning of downlink radio frames received via the downlink reference cell. Alternatively, the step of time~aligning the target cell comprises setting the transmission of uplink radio frames on the uplink target cell relative to the beginning of uplink radio frames transmitted via the uplink reference cell, using the target timing advance determined by the aggregation access point considering that the setting of the transmission of the uplink radio frames on the uplink target cell will be relative to the beginning of uplink radio frames transmitted via the uplink reference cell.

According to an advantageous embodiment of the invention which can be used in addition or alternatively to the above, the measurement results are transmitted to the aggregation access point on the physical uplink shared channel, PUSCH, of the reference cell.

According to an advantageous embodiment of the invention which can be used in addition or alternatively to the above, the step of transmitting the measurement results is part of the radio resource control layer, RRC, or of the medium access control layer, MAC, and in case it is part of the MAC layer, the measurement results are preferably transmitted within a MAC control element.

According to an advantageous embodiment of the invention which can be used in addition or alternatively to the above, the step of measuring the time difference information by the mobile terminal and of transmitting the measurement results to the aggregation access point is:

o performed periodically, and/or

o triggered by predetermined events, such as:

   i. configuration and/or activation of the target cell

   ii. the measurement results exceed a predetermined threshold

   iii. expiry of a timing advance timer

   iv. receiving a measurement reporting request from the aggregation access point.

According to an advantageous embodiment of the invention which can be used in addition or alternatively to the above, the measurement reporting request from the aggregation access point is:

o a deactivation/activation command for deactivating/activating a configured cell, including a flag indicating the request for measurement reporting, the flag preferably being set in one of the reserved bits of the deactivation/ activation command, or

o a radio resource control connection reconfiguration message, including a flag indicating the request for measurement reporting, or

o a random access channel, RACH, order message, or

o a random access channel, RACH, order message, with a predetermined codepoint or a predetermined combination of codepoints indicating the request for measurement reporting.

According to an advantageous embodiment of the invention which can be used in addition or alternatively to the above, the step of transmitting the target timing advance includes transmitting the target timing advance within a medium access control, MAC, control element, and preferably the target timing advance is transmitted using the downlink shared channel.
According to an advantageous embodiment of the invention which can be used in addition or alternatively to the above, the target timing advance is an absolute value not to be used in relation to the reference timing advance value of the reference cell, by the step of time-aligning the uplink target cell being only based on the absolute value of target timing advance. Or the target timing advance is a relative value to be used relative to the reference timing advance value of the reference cell, by the step of time-aligning the uplink target cell being also based on the reference timing advance.
According to an advantageous embodiment of the invention which can be used in addition or alternatively to the above, the reference cell is a primary cell or one of a plurality of secondary cells, and the target cell is one of a plurality of secondary cells.
According to an advantageous embodiment of the invention which can be used in addition or alternatively to the above, the target cell is one out of a plurality of target cells forming a group. The step of time-aligning is performed for each target cell of the group based on the same target timing advance received from the aggregation access point.
According to an advantageous embodiment of the invention which can be used in addition or alternatively to the above, the mobile terminal is configured with a plurality of non-time-aligned target cells, and the previously-described steps of the method are performed for each of the target cells.
According to an advantageous embodiment of the invention which can be used in addition or alternatively to the above, the measurement results are transmitted to the aggregation access point within one message, preferably for all target cells that are configured or all target cells that are configured and activated.
The present invention further provides a mobile terminal for time-aligning uplink transmissions in a mobile communication system. The mobile terminal is in communication with an aggregation access point and is configured with a time-aligned-uplink reference cell and with a non-time-aligned uplink target cell. A processor of the mobile terminal measures transmission and/or reception time difference information relating to transmissions on the target and/or the reference cell. A transmitter of the mobile terminal transmits the measurement results to the aggregation access point. A receiver of the mobile terminal receives a target timing advance from the aggregation access point. The processor and transmitter time-align the uplink target cell by adjusting a timing for uplink transmissions on the uplink target cell based on the target timing advance received from the aggregation access point.
According to an advantageous embodiment of the invention which can be used in addition or alternatively to the above, the receiver, processor and transmitter time-align the reference cell by performing a random access procedure with the aggregation access point on the reference cell.

According to an advantageous embodiment of the invention which can be used in addition or alternatively to the above, the processor determines a downlink reception time difference ($\Delta_{Scell - PCell}R_{XDL}$) between the target and reference cell, by measuring the time between the beginning of a first downlink subframe on the target cell ($T_{DL\_RX\_SCell}$) and the beginning of the corresponding downlink subframe on the reference cell ($T_{DL\_RX\_PCell}$). The downlink subframes on the reference and target cell refer to the same subframe number. Optionally the transmitter transmits the downlink reception time difference between the target and reference cell as the measurement results to the aggregation access point.

According to an advantageous embodiment of the invention which can be used in addition or alternatively to the above, the processor determines a reception transmission time difference between the target and reference cell ($\Delta_{Scell - PCell}R_{XDL} - TXUL$), by measuring the time difference between the time when the mobile terminal transmits an uplink radio frame on the reference cell ($T_{UL\_TX\_PCell}$) and the time when the mobile terminal receives a downlink radio frame on the target cell ($T_{DL\_RX\_SCell}$). The uplink radio frame and and the downlink radio frame relate to the same radio frame. Optionally, the transmitter is adapted to transmit the reception transmission time difference between the target and reference cell as measurement results to the aggregation access point.

According to an advantageous embodiment of the invention which can be used in addition or alternatively to the above, the processor and transmitter when time-aligning the uplink target cell set the transmission of uplink radio frames on the uplink target cell relative to the beginning of downlink radio frames received via the downlink target cell, using the target timing advance determined by the aggregation access point considering that the setting of the transmission of the uplink radio frames on the uplink target cell will be relative to the beginning of downlink radio frames received via the downlink target cell, respectively. Alternatively, the processor and transmitter when time-aligning the uplink target cell sets the transmission of uplink radio frames on the uplink target cell relative to the beginning of downlink radio frames received via the downlink reference cell, using the target timing advance determined by the aggregation access point considering that the setting of the transmission of the uplink radio frames on the uplink target cell will be relative to the beginning of downlink radio frames received via the downlink reference cell. Alternatively, the processor and transmitter when time-aligning the uplink target cell set the transmission of uplink radio frames on the uplink target cell relative to the beginning of uplink radio frames transmitted via the uplink reference cell, using the target timing advance determined by the aggregation access point considering that the setting of the transmission of the uplink radio frames on the uplink target cell will be relative to the beginning of uplink radio frames transmitted via the uplink reference cell.

According to an advantageous embodiment of the invention which can be used in addition or alternatively to the above, the transmitter transmits the measurement results to the aggregation access point on the physical uplink shared channel, PUSCH, of the reference cell. Preferably, the measurement results are transmitted to the aggregation access point is part of the radio resource control layer, RRC, or of the medium access control layer, MAC, and in case it is part of the MAC layer, the measurement results are preferably transmitted within a MAC control element.

According to an advantageous embodiment of the invention which can be used in addition or alternatively to the above, the processor is triggered to perform the measuring the time difference information:

 o periodically, and/or

 o by predetermined events, such as:

  i. configuration and/or activation of the target cell

  ii. the measurement results exceed a predetermined threshold

  iii. expiry of a timing advance timer

  iv. receiving a measurement reporting request from the aggregation access point.

According to an advantageous embodiment of the invention which can be used in addition or alternatively to the above, the receiver receives the target timing advance using the downlink shared channel and within a medium access control, MAC, control element.

According to an advantageous embodiment of the invention which can be used in addition or alternatively to the above, the target cell is one out of a plurality of target cells forming a group, wherein the transmitter and processor time-align each target cell of the group based on the same target timing advance received from the aggregation access point.

According to an advantageous embodiment of the invention which can be used in addition or alternatively to the above, the mobile terminal is configured with a plurality of non-time-aligned target cells, and the mobile terminal performs the steps according to one of the above-described methods for each of the target cells.

According to an advantageous embodiment of the invention which can be used in addition or alternatively to the above, the transmitter transmits the measurement results to the aggregation access point within one message preferably for all target cells that are configured or all target cells that are configured and activated.

The present invention further provides an aggregation access point for providing a timing advance to a mobile terminal in a mobile communication system. The mobile terminal is in communication with the aggregation access point and is configured with a time-aligned uplink reference cell and with a non~time~aligned uplink target cell. A receiver of the aggregation access point transmits measurement results from the mobile terminal, the measurement results referring to transmission and/or reception time difference information relating to transmissions on the target cell and/or reference cell. A processor of the aggregation access point determines a target timing advance based on at least the received measurement results and on a reference timing advance used for uplink transmissions on the time~aligned reference cell. A transmitter of the aggregation access point transmits the target timing advance to the mobile terminal.

According to an advantageous embodiment of the invention which can be used in addition or alternatively to the above, the receiver receives as the measurement results a downlink reception time difference between the target and reference cell ($\Delta_{Scell-PCell}R_{XDL}$), being the time between the beginning of a first downlink subframe on the target cell ($T_{DL\_RX\_SCell}$) and the beginning of the corresponding downlink subframe on the reference cell ($T_{DL\_RX\_PCell}$), wherein downlink subframes on the reference and target cell refer to the same subframe number, or a reception transmission time difference between the target and reference cell ($\Delta_{Scell-PCell}R_{XDL} - T_{XUL}$), being the time difference between the time when the mobile terminal transmits an uplink radio frame on the reference cell ($T_{UL\_TX\_PCell}$) and the time when the mobile terminal receives a downlink radio frame on the target cell ($T_{DL\_RX\_SCcell}$), wherein the uplink radio frame and and the downlink radio frame relate to the same radio frame. According to an advantageous embodiment of the invention which can be used in addition or alternatively to the above, wherein in case the receiver receives the reception transmission time difference as the measurement results, the processor determines a downlink reception time difference between the target cell and the reference cell ($\Delta_{Scell-PCell}R_{XDL}$) by subtracting the reception transmission time difference from the timing advance of the reference cell. According to an advantageous embodiment of the invention which can be used in addition or alternatively to the above, the processor determines the target timing advance based on the downlink reception time difference, and preferably further based on a downlink transmission time difference ($\Delta_{Scell-PCell}T_{XDL}$) between the target cell and the reference cell. The downlink transmission time difference between the target cell and the reference cell is the time difference between the beginning of a downlink subframe on the reference cell ($T_{DL\_TX\_PCell}$) and the beginning of the corresponding downlink subframe on the target cell ($T_{DL\_TX\_SCell}$), wherein the downlink subframes refer to the same subframe number.

According to an advantageous embodiment of the invention which can be used in addition or alternatively to the above, the transmitter transmits a measurement reporting request to the mobile terminal. The measurement reporting request is:

o a deactivation/activation command for deactivating/activating a configured cell, including a flag indicating the request for measurement reporting, the flag preferably being set in one of the reserved bits of the deactivation/ activation command, or

o a radio resource control connection reconfiguration message, including a flag indicating the request for measurement reporting, or

o a random access channel, RACH, order message, or

o a random access channel, RACH, order message, with a predetermined codepoint or a predetermined combination of codepoints indicating the request for measurement reporting.

The present invention further provides a computer readable medium storing instructions that, when executed by a processor of a mobile terminal, cause the mobile terminal to time align uplink transmissions in a mobile communication system as follows. Transmission and/or reception time difference information relating to transmissions on the target and/or the reference cell are measured. The measurement results are transmitted to the aggregation access point. A target timing advance is received from the aggregation access point. The uplink target cell is time-aligned by adjusting a timing for uplink transmissions on the uplink target cell based on the target timing advance received from the aggregation access point. The computer readable medium stores instructions that, when executed by a processor of a mobile terminal, cause the mobile terminal to perform the steps of the above-described methods.

**BRIEF DESCRIPTION OF THE FIGURES**

In the following the invention is described in more detail in reference to the attached figures and drawings. Similar or corresponding details in the figures are marked with the same reference numerals.

**Fig. 1**          shows an exemplary architecture of a 3GPP LTE system,

**Fig. 2**          shows an exemplary overview of the overall E-UTRAN architecture of 3GPP LTE,

**Fig. 3**          shows exemplary sub-frame boundaries on a downlink component carrier as defined for 3GPP LUTE (Release 8/9),

**Fig. 4**          shows an exemplary downlink resource grid of a downlink slot as defined for 3GPP LUTE (Release 8/9),

**Figs. 5 & 6**   show the 3GPP LTE-A (Release 10) Layer 2 structure with activated carrier aggregation for the downlink and uplink, respectively,

**Fig. 7**          shows a RACH procedure as defined for 3GPP LUTE (Release 8/9) in which contentions may occur,

**Fig. 8**          shows a contention-free RACH procedure as defined for 3GPP LUTE (Release 8/9),

**Fig. 9a**        illustrates the timing misalignment of uplink transmissions from two mobile terminals as received in the eNodeB, when no uplink timing alignment is performed,

**Fig. 9b**        illustrates the effect of performing uplink timing transmissions on the scenario as explained for Fig. 9a, the uplink timing alignment synchronizing the uplink transmissions from two mobile terminals,

**Fig. 10**        shows the format of an activation/deactivation MAC control element, being a command for activating or deactivating one or more SCells,

**Fig. 11**        shows the format of an Extended Power Headroom MAC control element, when Type 2 PHR is reported,

**Fig. 12**        shows an exemplary scenario in which a user equipment aggregates two cells, one cell originating from an eNodeB, and the other cell originating from a Remote Radio Head (RRH),

**Fig. 13**        shows an exemplary scenario in which a user equipment aggregates two cells, one cell originating from an eNodeB, and the radio cell originating from a Frequency Selective Repeater (FSR),

**Fig. 14**        illustrates the disadvantage of using a PRACH transmission on a component carrier to be uplink-time-aligned, and in particular, the differences in the uplink timing between PRACH on one component carrier and PUSCH/PUCCH on the another component carrier,

**Fig. 15**        is a signaling diagram illustrating an uplink~time~alignment procedure according to one embodiment of the invention,

**Fig. 16**        presents the network scenario assumed for one particular embodiment of the invention,

**Fig. 17**        shows a signaling diagram illustrating an uplink-time-alignment procedure according to another embodiment of the invention,

**Fig. 18**        shows a timing diagram of transmissions exchanged between the UE and the eNodeB, including uplink~time~aligned uplink transmission according to one embodiment of the invention,

**Fig. 19**        shows a timing diagram of transmissions exchanged between the UE and the eNodeB, including uplink-time-aligned uplink transmissions according to another embodiment of the invention, wherein the PCell and SCell downlink transmission are time-delayed,

**Fig. 20**        shows a format of a MAC control element for transmitting the measurement results from the mobile terminal to the eNodeB, the measurement results being the downlink reception time differences between the PCell and all the SCells,

Fig. 21    shows a format of a MAC control element for transmitting the measurement results from the mobile terminal to the eNodeB, the measurement results being the reception transmission time differences between the PCell and all the SCells,

Fig. 22    illustrates the uplink time alignment process performed at the mobile terminal, in case the timing advance command received from the eNodeB is calculated relative to the beginning of an uplink radio frame of the PCell, according to one embodiment of the invention,

Fig. 23    illustrates the uplink time alignment process performed at the mobile terminal, in case the timing advance command received from the eNodeB is calculated relative to the beginning of a downlink radio frame of the PCell, according to one embodiment of the invention, and

Fig. 24    shows the format of a timing advance command according to one embodiment of the invention.

## DETAILED DESCRIPTION OF THE INVENTION

The following paragraphs will describe various embodiments of the invention. For exemplary purposes only, most of the embodiments are outlined in relation to an orthogonal single-carrier uplink radio access scheme according to 3GPP LTE (Release 8/9) and LTE-A (Release 11) mobile communication systems, partly discussed in the Technical Background section above. It should be noted that the invention may be advantageously used for example in a mobile communication system such as 3GPP LTE-A (Release 11) communication systems as described in the Technical Background section above, but the invention is not limited to its use in this particular exemplary communication networks. The invention may be broadly used in communication systems where time alignment of uplink transmissions on multiple cells (having different propagation delays) is desired.

The term "reference cell" refers to that cell (PCell or one of the SCells) which uplink transmissions are already time aligned. Advantageously, it would be the PCell since this cell is the one which is most accurately time aligned due to the RACH procedure being performed for it (RACH allows absolute measurements, thus being more accurate than the relative measurements done according to some embodiments of the present invention). Nevertheless, it may also be any of the activated and time-aligned SCells, previously being time-aligned according to the present invention.

The term **"aggregation access point"** is used to denote the location in the access network, i.e. a node, at which the uplink transmissions of the user equipment on the different uplink component carriers are aggregated (e.g. eNode or base station). Aggregation as such refers to

-    a simultaneous reception of the radio signals corresponding to transmissions (e.g. respective sub-frames) on the different uplink component carriers from the user equipment, i.e. on the physical layer, for joint physical layer processing (e.g. joint demodulation (e.g. including utilization of one IFFT (Inverse Fast Fourier Transform) for the processing of the received sub-frame in an OFDM system) and/or joint decoding of coded transport block(s), etc.) by the aggregation access point;
and/or

-    a processing of protocol data units received in the transmissions (e.g. respective sub-frames) on the different uplink component carriers from the mobile terminal in a protocol entity of the aggregation access point.

The conjoint processing of protocol data units received in the transmissions on the different uplink component carriers from the user equipment may be - in one exemplary implementation - the conjoint processing of PDUs obtained from the transmissions on the different uplink component carriers in the MAC layer or RLC layer of the aggregation access point, e.g. for the purpose of PDU reordering.

The term **"target cell"** refers to that cell, which uplink transmissions are not yet time-aligned and which is thus the target of the timing-aligning procedure of the invention. In accordance with the above definition of the "reference cell", the "target cell" would be most of the times one of the SCells that does not have or lost its uplink time alignment. In special cases, the target cell may also be the PCell; namely, when the PCell (which was initially time-aligned using a RACH procedure loses its time-alignment). In this case, a time-alignment of the PCell using the time-alignment procedure of the present could be performed, thus avoiding performing the RACH procedure, which however is more preferable.

In this document, **"simultaneously"** or **"at the same point in time"** means at the same point in time plus/minus some small deviation, which may be in the $\mu s$ range. For example, minor differences between uplink and downlink propagation delays in a given radio cell as well as the granularity of timing advance values imply that there is no perfect time alignment of the uplink transmissions on UL PCells or UL SCells. In any case simultaneous arrival of uplink transmissions is ensured to the extent that the uplink transmissions by a mobile terminal via distinct uplink cells (having different propagation delays) can be processed together by the receiving aggregation access point. For example, different transmissions of one given sub-frame on the uplink cells are time aligned such that they are received in a manner allowing the aggregation access point to process all transmissions of the sub-frame together (joint processing).

Furthermore, it should also be noted that time alignment of uplink cells that are configured for a mobile terminal is of course also applicable, where the mobile terminal has to time align more than one uplink cell. Basically, an arbitrary number of uplink cells can be time aligned by the procedures described herein, as long as there is one reference cell being time-aligned.

The term "**shifting**" is used in connection with shifting the transmission of uplink subframes by a particular time value in relation to a reference, which can be e.g. the beginning of downlink subframes received via the downlink reference cell. "Shifting" means that the mobile terminal when uplink-time-aligned, sets the time of transmission, i.e. transmits, an uplink frame at a time which differs from the reference by the particular time value.

The explanations given in the Technical Background section above are intended to better understand the mostly 3GPP LTE (Release 8/9) and LTE-A (Release 10) technical fields. They should not be understood as limiting the invention to the described specific implementations of processes and functions in the mobile communication network. The specific exemplary embodiments described in the following may be implemented in LTE Release 11, which discussion started recently.

One aspect of the invention is to time-align a non-time-aligned uplink of a serving cell. The following specific scenario is assumed, however should not be understood as limiting the invention, but as an example for describing the invention's principles. It is assumed that the reference cell is the PCell, and the target cell is the SCell. The aggregation access point is assumed to be the eNodeB.

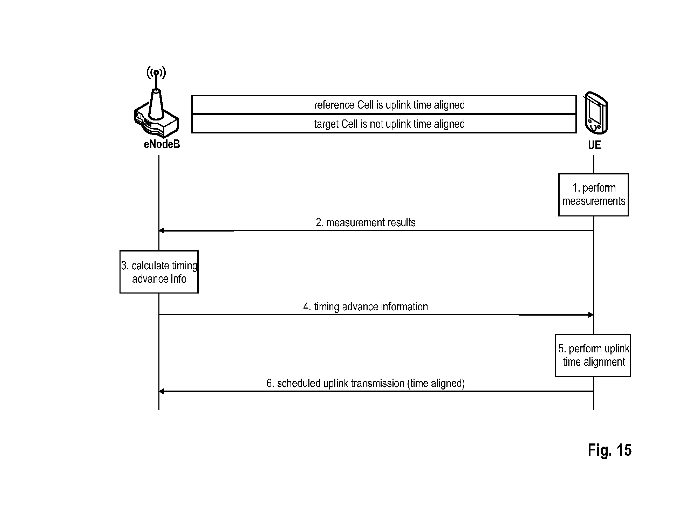

Fig. 15 discloses a signaling diagram illustrating the various steps performed by the mobile terminal and the eNodeB, and the messages exchanged between them to allow the time-alignment procedure according to one embodiment of the invention. The mobile terminal has configured a PCell over which it exchanges data with the eNodeB. The PCell of the mobile terminal is already time-aligned in the uplink, i.e. the uplink transmissions made by the mobile terminal over the PCell are performed by the mobile terminal at a timing such that their reception at the eNodeB is synchronized with the receptions of uplink transmissions of other mobile terminals over the PCell. The PCell was uplink-time-aligned initially by performing a RACH procedure as explained in the background section, be it contention based or non-contention based (see Fig. 7 and 8). Though it seems less advantageous, it would be theoretical possible to initially synchronize the PCell using the principles of the present invention, assuming that the reference is an uplink-time-aligned SCell. The following description however assumes that the PCell is initially synchronized in the uplink using the RACH procedure, since the PCell will always be uplink synchronized for the case that the UE aggregates multiple serving cells, e.g. PUCCH is transmitted on PCell, and will have the "best" uplink-time-alignment (due to the RACH procedure being more accurate).

The mobile terminal is now configured with a Secondary Cell, SCell, which however is not yet time~aligned in the uplink. For instance, the SCell has just been configured, or the SCell, having been previously uplink~time~aligned, has lost its uplink synchronization (e.g. timing advance timer expires). In any case, the mobile terminal has now to achieve uplink time alignment in order to be able to transmit uplink data to the eNodeB through the SCell. The following steps are performed as exemplified by Fig. 15.

1. The mobile terminal performs measurements to determine specific timing information of transmissions/receptions in the PCell and/or SCell. There are various timing information which can be determined at the mobile terminal, as will be explained in detail further below. The timing information which the terminal measures, and in particular the timing information which is then transmitted to the eNodeB, is such that it allows the eNodeB to determine the timing advance for the SCell by considering the uplink time alignment of the PCell, which is already time-aligned and thus serves as a reference for the time~alignment of the SCell. The information of the measurement to be transmitted to the eNodeB is such that it isn't already known in the eNodeB, thus relating to timings which are unknown in the eNodeB, such as to transmission and/or reception timing information of signal exchange performed on the PCell and/or SCell between the mobile terminal and the eNodeB.

2. The result of the measurements is transmitted by the mobile terminal to the eNodeB.

3. The eNodeB uses the information received from the mobile terminal to determine a timing advance for the SCell; the determination is based on the received information and on information referring to the uplink time alignment of the PCell. There are various possibilities how to achieve this, and the description later will describe them in more detail.

4. In any case, the eNodeB is able to determine a timing advance for the SCell, and prepares corresponding timing advance information destined for the mobile terminal and its SCell, so as to allow the mobile terminal to adjust its uplink transmission timing for the SCell.

This timing advance information, to be transmitted to the mobile terminal, may be an absolute value, i.e. similar to the initial timing advance value known from the standard, which is applied by the mobile terminal with respect to the time of arrival of a downlink transmission from the eNodeB on the SCell. Alternatively, the timing advance information transmitted to the mobile terminal may be relative to the timing advance used for the PCell, thus allowing the mobile terminal to apply the value with respect to the time of transmission of an uplink transmission by the mobile terminal to the eNodeB on the time-aligned PCell, or with respect to the time of arrival of a downlink transmission from the eNodeB on the PCell

5. Using the timing advance information received from the eNodeB, the mobile terminal can time-align the uplink transmission timing of the SCell. As just explained, how exactly the uplink transmission timing is adjusted depends on the particular content of the timing advance information. One option is that the timing advance information comprises an absolute value of the timing advance to be applied, in which case the timing advance value for the SCell was calculated by the eNodeB relative to downlink transmission of the SCell. In said case, the mobile terminal shifts its uplink transmission timing relative to the beginning of the downlink subframes received over the SCell by the amount of time indicated in the timing advance information. Alternatively, in case the timing advance information received at the mobile terminal is relative to the timing advance of the PCell, the mobile terminal shifts its uplink transmission timing relative to the beginning of the uplink subframes transmitted over the time-aligned PCell by the amount of time indicated in the time advance information, or relative to a downlink transmission on the PCell

Thus, the mobile terminal time-aligns its uplink of the SCell, and can then start transmitting scheduled uplink transmissions based on an uplink grant it previously received.

There are various advantages provided by the present invention as explained above. First, a procedure is implemented to apply different timing advances on different component carriers, i.e. cells. Therefore, in situations where the propagation of the SCell is different to the PCell, the uplink timing can be adjusted for each cell separately. Furthermore, applying a random access procedure in the SCell is avoided. As explained at the end of the Background section, a RACH procedure would lead to several problems, such increased complexity of the mobile terminal, or complicated prioritization rules for the power limitation, or problems with the power amplifier. Furthermore, the uplink synchronization process of the present invention is faster compared to the approach when RACH procedure is performed. As will be shown later in detail this is in particular important for the activation of an uplink non time-aligned SCell.

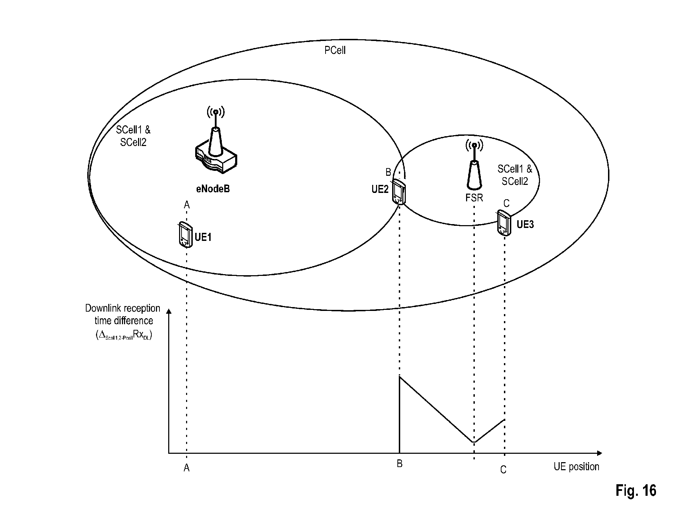

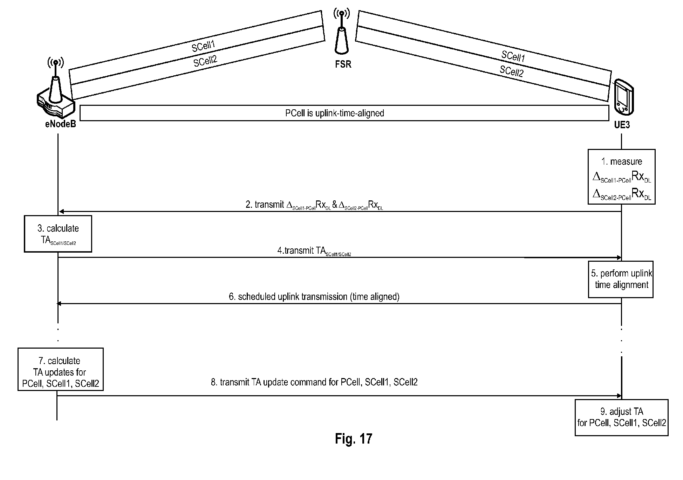

In the following a more specific embodiment of the invention will be explained with reference to Fig. 16 and 17.

Fig. 16 shows a scenario in which a PCell, SCell1 and SCell2 are served by the eNodeB to different UEs, UE1, UE2, UE3. Further, a Frequency Selective Repeater (FSR) is provided, being configured for the frequencies used by Scell1 and SCell2, such that it amplifies signals transmitted/received on the secondary serving cells SCell1 and SCell2, however not those signals transmitted/received on the PCell. As illustrated by Fig. 16, the coverage of the PCell is greater than the one of the SCells.

In the lower part of Fig. 16 the downlink reception time difference at the mobile terminal between the SCells1 or 2 and the PCell ($\Delta_{Scell - PCell} R_{XDL}$) is plotted against the position of a UE in the cell. The downlink reception time difference is the difference between the point in time when the UE receives a downlink subframe from the eNodeB over the SCell and a point in time when the UE receives a downlink subframe from the eNodeB over the PCell.

In this particular scenario, the need for different uplink timing advances for PCell, Scell1 and SCell2 changes depending on the location of the UE. In more detail, three UEs are depicted in Fig. 16; UE1 is located at A, within the coverage of PCell, Scell1 and SCell2; UE2 is located at B, at the overlapping area of the coverage for Scell1/SCell2 provided by the eNodeB and the coverage for SCell1/SCell2 provided by the FSR; UE3 is located at C, outside coverage for SCell1/SCell2 provided by eNodeB, but inside the coverage for SCell1/SCell2 provided by the FSR.

From location A to location B, the PCell, SCell1 and SCell2 are provided by the same transmission node, e.g. eNodeB to the UEs. Therefore, the propagation delays for the three cells should be substantially the same, and thus the downlink reception time difference should be negligible. As a result, the same timing advance can be used for the PCell, SCell1 and SCell2. On the other hand, at location B it is assumed that the signal for Scell1/SCell2 from FSR is stronger than the one for SCell1/SCell2 from eNodeB, and correspondingly, the UE2 at location B receives signals over PCell from the eNodeB and signals over SCell1/SCell2 from the FSR. Consequently, the propagation between PCell signals and Scell1/SCell2 signals is different, which results in different downlink reception timings between PCell and SCell1/SCell2. As apparent from the lower part of Fig. 16, the plotted downlink reception time difference measured by the UE2 between PCell and SCell1/SCell2 suddenly jumps to a particular value, at the moment when UE2 switches from one reception path (from eNodeB) to another (from FSR).

At location B the downlink reception time difference is at its maximum since the path length difference between the PCell path and the SCell1/SCell2 path is at its maximum too in this exemplary scenario. The downlink reception time difference decreases as the UE moves further towards the FSR, and is minimum directly at the FSR, the downlink reception time difference mainly being the time of the FSR for receiving, processing and transmitting the amplified signal for SCell1/SCell2. When moving away again from the FSR, the downlink reception time difference increases again.

Accordingly, UE2 and UE3 cannot use the same timing advance for Scell1/SCell2 as used for the PCell, but would have to configure separate uplink timing advances for them. However, the same timing advance could be used for Scell1 and SCell2, since in the present scenario the propagation delays for Scell1 and SCell2 are the same.

Fig. 17 is a signaling diagram illustrating the steps performed according to one embodiment of the invention, assuming a scenario based on Fig. 16. In particular, it is assumed that UE3 of Fig. 16 needs to perform uplink synchronization for SCell1 and SCell2. UE3 receives from the FSR downlink signals on the SCell1 and SCell2, and is further receiving and transmitting signals with the eNodeB over the PCell.

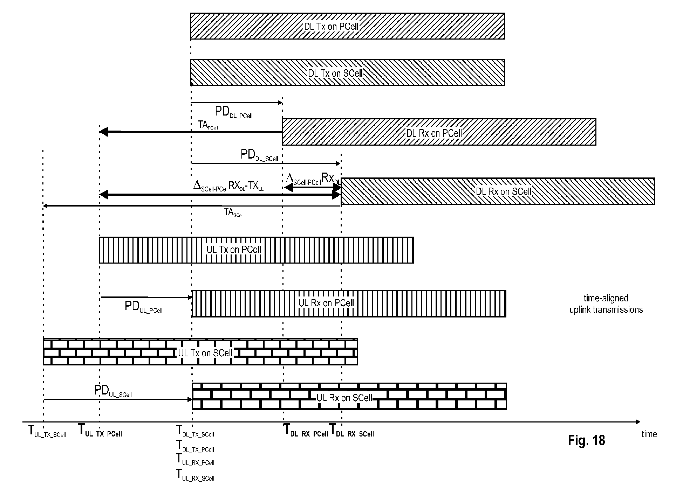

Fig. 18 illustrates the reception and transmission timing of frames transmitted on the PCell and SCell. For ease of illustration, only one SCell has been depicted in Fig. 18, instead of both SCell1 and SCell2. The following description referring to the SCell of Fig. 18 is equally applicable to both SCell1 and SCell2.

As apparent therefrom, in this particular embodiment of the invention, it is assumed that both PCell and SCell transmit a frame in the downlink to UE3, at the same time time, $T_{DL\_TX\_PCell}$ and $T_{DL\_TX\_SCell}$. As will be explained later, this is not always the case. The eNodeB is already transmitting data on PCell to UE3; the eNodeB transmits e.g. the common reference symbols in the downlink on the SCell, which are then received by UE3.

Though the downlink transmissions are performed at the same time, the reception of same by the UE are not at the same time ($T_{DL\_RX\_SCell}$, $T_{DL\_RX\_SCell}$), since there are different propagation delays ($PD_{DL\_PCell}$, $PD_{DL\_SCell}$) involved for the PCell and the SCell. In particular, the SCell path goes first to the FSR and from there to the UE3, whereas the PCell path reaches the UE3 directly and is thus shorter.

The uplink transmissions of the PCell are already time aligned and occur at $T_{UL-TX-PCell}$, which is timed using a timing advance $TA_{PCell}=2 \times PD_{DL-PCell}$, relative to the beginning of the downlink radio frame received on the PCell, i.e. $T_{UL-TX}\_P_{Cell} = T_{DL\_RX\_PCell} - TA_{PCell}$. The uplink transmissions from UE3 on PCell arrive at $T_{UL-RX-PCell}$ in the eNodeB, which is $T_{UL\_TX-PCell} + PD_{UL\_PCell}$, wherein the assumption is that $PD_{UL\_PCell}$ is equal to $PD_{DL\_PCell}$ or the difference at least being negligible.

As apparent from the diagram in Fig. 18 or from Fig. 16, the timing advance already used for the PCell cannot be used for uplink transmissions on the SCell for UE3, due to the different propagation delays. Therefore, it is necessary to separately synchronize the uplink of the SCell for UE3, according to one of the various embodiments of the invention.

One of the main ideas of the invention is to determine the timing advance for the SCell using the uplink timing of the uplink~time~aligned PCell, and in particular the timing advance used by the UE3 to synchronize the uplink transmissions in the PCell. The following timing relations apply for a timing advance for the SCell, $TA_{SCell}$, in relation to the timing advance of the PCell, $TA_{PCell}$, and other parameters.

$$TA_{PCell} = PD_{UL\_PCell} + PD_{DL\_PCell} \qquad\qquad (equation\ 1)$$

$$TA_{SCell} = PD_{UL\_SCell} + PD_{DL\_SCell} = PD_{UL\_PCell} + PD_{DL\_PCell} - (\Delta_{SCell\text{-}PCell}PD_{DL} + \Delta_{SCell\text{-}PCell}PD_{UL})$$

$$= \quad TA_{PCell} \quad - (\Delta_{SCell\text{-}PCell}PD_{DL} + \Delta_{SCell\text{-}PCell}PD_{UL})$$

wherein $\Delta_{SCell\text{-}PCell}PD_{DL}$ is the difference between the propagation delays in the downlink of the PCell and the SCell; and wherein $\Delta_{SCell\text{-}PCell}PD_{UL}$ is the difference between the propagation delays in the uplink of the PCell and the SCell.

The following substitution:

$$\Delta_{SCell\text{-}PCell}PD_{UL} = \Delta_{SCell\text{-}PCell}PD_{DL} + \Delta_{SCell}PD_{UL\text{-}DL} \qquad\qquad (equation\ 2)$$

where $\Delta_{SCell}PD_{UL\text{-}DL}$ is the difference between the propagation delays of the uplink and downlink for the SCell, leads to the equation:

$$TA_{SCell} = TA_{PCell} - 2 \cdot \Delta_{SCell\text{-}PCell}PD_{DL} - \Delta_{SCell}PD_{UL\text{-}DL} \qquad\qquad (equation\ 3)$$

The following substitution:

$$\Delta_{SCell\text{-}PCell}PD_{DL} = \Delta_{SCell\text{-}PCell}RX_{DL} - \Delta_{SCell\text{-}PCell}TX_{DL} \qquad \text{(equation 4)}$$

where $\Delta_{SCell\text{-}PCell}RX_{DL}$ is the downlink reception time difference between the PCell and the SCell, i.e. the difference in time between the reception in the UE3 of a downlink transmission from the eNodeB on the PCell and the reception in the UE3 of a downlink transmission from the eNodeB on the SCell, and
where $\Delta_{SCell\text{-}PCell}TX_{DL}$ is the downlink transmission time difference between the PCell and the SCell, i.e. the difference in time between the transmission in the eNodeB of a downlink transmission to UE3 on the PCell and the transmission in the eNodeB of a downlink transmission to UE3 on the SCell, leads to the equation:

$$TA_{SCell} = TA_{PCell} - 2 \cdot (\Delta_{SCell\text{-}PCell}RX_{DL} - \Delta_{SCell\text{-}PCell}TX_{DL}) - \Delta_{SCell}PD_{UL\text{-}DL} \qquad \text{(equation 5)}$$

$$= TA_{PCell} - 2 \cdot \Delta_{SCell\text{-}PCell}RX_{DL} + 2 \cdot \Delta_{SCell\text{-}PCell}TX_{DL} - \Delta_{SCell}PD_{UL\text{-}DL} \qquad \text{(equation 6)}$$

Put differently, the timing advance of the SCell can be calculated based on:

● the timing advance of the PCell

● the downlink reception time difference between the PCell and the SCell

● the downlink transmission time difference between the PCell and the SCell

● the propagation delay difference between the uplink and the downlink on the SCell The timing advance of the PCell is basically both known to the eNodeB and UE3.

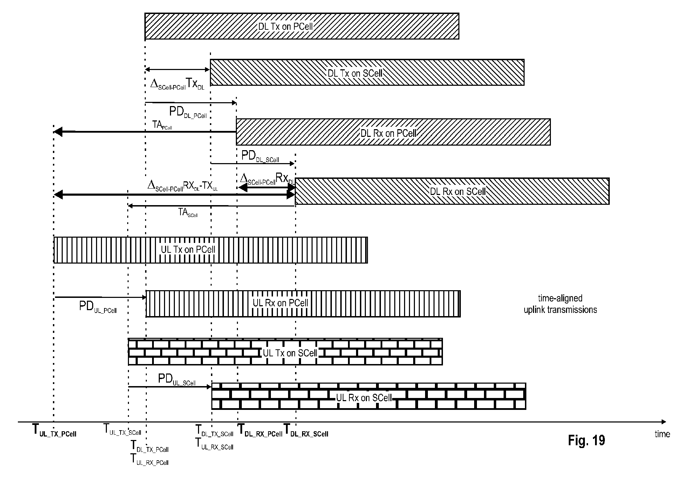

The downlink reception time difference between the PCell and the SCell is not known in the eNodeB, but can be measured at UE side.
The downlink transmission time difference between the PCell and the SCell $\Delta_{SCell\text{-}PCell}TX_{DL}$ is known only to the eNodeB, however not to UE3, as will become more clear in connection with Fig. 19. In the particular embodiment of Fig. 18 $\Delta_{SCell\text{-}PCell}TX_{DL}$ is zero; for the embodiment of Fig. 19 explained later the downlink transmission time difference is not zero.
The propagation delay difference between the uplink and the downlink of a serving cell is assumed to be negligible for the purposes of the invention. More specifically, it is assumed that the propagation delay for the uplink and downlink direction is the same for each carrier. Simulation done by 3GPP WG RAN4 provided results of the simulated propagation delay differences for inter-band carrier aggregation case which show that for the same reception node (i.e. the eNodeB), propagation timing difference will be less than one TA step (~0.5us) in 97~98% case and less than five TA steps in 100% case. Following this for the SIB~2 linked DL and UL carrier pairs, where the frequency gap between uplink and downlink will be even smaller than that between different frequency bands ,resulting in that the propagation timing difference between the UL direction and the DL direction for a given cell will be even less and hence negligable for the present invention.
Assuming the above and considering that the timing advance of the SCell is to be calculated at the eNodeB, the eNodeB should be provided with information to be able to determine the downlink reception time difference at the eNodeB side. Then, the eNodeB would have all information to determine the timing advance of the SCell relative to the timing advance of the PCell.
Resulting from the above considerations, one embodiment of the invention for uplink-time-alignment of SCell for UE3 will be presented below with reference to Fig. 17.
In step 1 of Fig. 17, the UE3 measures the downlink reception time difference $\Delta_{SCell\text{-}PCell}RX_{DL}$ and in particular the time difference between the time when the UE3 receives the start of one subframe from the PCell and the time when the UE3 receives the corresponding start of one subframe from the SCell that is closest in time to the subframe received from the PCell. Correspondingly, UE3 performs the measurements for each of the two SCells, resulting in $A_{SCell1-PCell}RX_{DL}$ and $\Delta_{SCell2-PCell}RX_{DL}$. In the present scenario the downlink reception time difference will be substantially the same for SCell1 and SCell2. The downlink reception time difference for one SCell can be seen in Fig. 18.

In step 2 of Fig. 17, the UE3 transmits the results of the measurements, i.e. the downlink reception time difference $\Delta_{SCell1-PCell}RX_{DL}$ and $\Delta_{SCell2}-P_{Cell}RX_{DL}$, to the eNodeB, preferably by using the PUSCH of the PCell. Alternatively, since both downlink reception time differences are the same, the UE3 may transmit only one of the two measurements.

The eNodeB receives in step 3 the measurements results and uses same to calculate the timing advance for the SCells. Since the downlink reception time difference is the same for both SCells, the eNodeB will only calculate one timing advance that may be used by the UE3 to uplink-time-align both SCells. Considering the assumptions of the present embodiment, equation 6 discussed above can be written in a simplified manner as:

$$TA_{SCell} = TA_{PCell} - 2 \cdot \Delta_{SCell-PCell}Rx_{DL} \qquad \text{(equation 7)}$$

since both $\Delta_{SCell-PCell}TX_{DL}$ and $\Delta_{SCell}PD_{UL-DL}$ may be considered zero.

The eNodeB thus uses the received downlink reception time difference(s) $\Delta_{SCell1-PCell}RX_{DL}/\Delta_{SCell2-PCell}RX_{DL}$ and the known time advance for the PCell to calculate the time advance for the SCell1 and SCell2 $TA_{SCell1/SCell2}$ according to equation 7.

In step 4, the eNodeB transmits the $TA_{SCell1/SCell2}$ to the UE3, preferably using the downlink shared channel and a MAC control element as will be explained later in more detail.

In step 5, the UE3 receives the timing advance information from the eNodeB and applies the timing advance $TA_{SCell1/SCell2}$ relative to the beginning of the downlink radio frame of the SCell1 and SCell2, similar to the way in which a standard initial timing advance is applied by a UE.

In this way, the UE3 can uplink-time-align the SCell1 and SCell2, and start uplink transmissions thereon according to received uplink scheduling grants. The first uplink grant is usually part of the RAR message within the standard RACH procedure. Since in the invention no RACH procedure is performed on an SCell, the first uplink grant for the SCells can be transmitted at any time in any way to the UE3 via the PDCCH.

The UE3 uses an uplink grant on SCell1 and SCell2 to transmit an uplink transmission to the eNodeB. This is illustrated in Fig. 18 for one SCell. The UE3 sets the time of transmission of an uplink radio frame for the SCell $T_{UL\_TX-SCell}$ relative to the time of reception of a downlink radio frame for the SCell $T_{DL\_RX\_SCell}$, by "shifting" by the timing advance value $T_{SCell1/SCell2}$.

Such a time-aligned uplink transmission on the SCell is received at $T_{UL\_RX\_SCell}$ in the eNodB, after the propagation delay $PD_{UL-SCell}$.

Fig. 19 illustrates a timing diagram according to another embodiment of the invention. Compared to the timing diagram of Fig. 18, the difference is that the PCell and the SCell perform a downlink transmission at different times. Furthermore, it is assumed that the SCell1 and SCell2 have the same downlink transmission timing. In other words, there is a downlink transmission time difference between the PCell and the SCell $\Delta_{SCell-PCell}TX_{DL}$ which is not zero anymore but is the same for SCell1 and SCell2.

The uplink-time-alignment procedure explained before in connection with Fig. 17 can be similarly applied to the scenario exemplified in Fig. 19, considering the following changes in procedure.

The UE3 can measure the downlink reception time differences $\Delta_{SCell1-PCell}Rx_{DL}$ and $\Delta_{SCell2-PCell}Rx_{DL}$, which are the same for SCell1 and SCell2 (step 1). It should be noted that the downlink reception time difference not only considers the propagation delay differences between PCell path and SCell path (as in Fig. 18), but in this case also the downlink transmission time difference $A_{SCell-PCell}Tx_{DL}$. In this particular embodiment of the invention, the measured downlink reception time difference $\Delta_{SCell-PCell}Rx_{DL}$ is longer than the difference of the propagation delays between PCell and SCell, i.e. longer by the downlink transmission time difference between the PCell and the SCell $\Delta_{SCell-PCell}Tx_{DL}$. Such a downlink transmission time difference would be unknown, i.e. transparent, to the UE3.

These measurement results are then transmitted to the eNodeB, similar to step 2 of Fig. 17. The eNodeB calculates the timing advance for the SCell1 and SCell2, in this case again being the same timing advance. However, the eNodeB cannot use equation 7 as explained in connection with Fig. 18, but needs to additionally consider the downlink transmission time difference $\Delta_{SCell-PCell}Tx_{DL}$ as follows.

Starting from equation 6, the eNodeB would in this particular scenario use the following equation 8 to determine the timing advance of the SCells. Namely, only $\Delta_{SCell}PD_{UL-DL}$ is set to zero for the reasons explained before.

$$TA_{SCell} = TA_{PCell} - 2 \cdot \Delta_{SCell\text{-}PCell}RX_{DL} + 2 \cdot \Delta_{SCell\text{-}PCell}TX_{DL} \qquad \text{(equation 8)}$$

The determined timing advance $TA_{SCell1/SCell2}$ is transmitted from the eNodeB to the UE3 according to step 4, illustrated in Fig. 17. Accordingly, the UE3 uses the received timing advance value $TA_{SCell1/SCell2}$ to time align the uplink transmissions on the SCell1 and SCell2 with respect to the beginning of the downlink radio frames on the respective SCell1 and SCell2.

It should be noted that even though the eNB knows the timing advance used by the UE for uplink transmission on PCell, the UE autonomous change of the uplink timing according to TS36.133 section 7.1.2 causes some deviation from the timing advance value of the PCell signalled by the eNB to the UE, except only just after the PRACH transmission took place. Therefore, according to another alternative embodiment the UE also reports the used difference between DL radio frames received on the PCell and UL radio frames transmitted on the PCell to the eNB in addition to the downlink reception time difference measurements.

In the following, variants and additional steps for the above-described embodiments will be presented with reference to each step of Fig. 17.

*Triggering* of *the* step of *reporting* by *the* UE

In the previous embodiments it has been left open when the UE starts the measurements of step 1 and the reporting of the measurement results of step 2. Measurements may be for example performed periodically.

The reporting/signaling can be performed either periodically or event-triggered.

For instance, the periodical triggering of the reporting may be similar to mobility or power headroom or buffer status report reporting. The advantage of periodical reports is that the eNodeB gets with a certain frequency up-to-date information on the measurement results. The eNodeB is thus enabled to calculate the correct timing advance for an SCell at periodical intervals, and thus immediately transmit the timing advance to the UE when necessary.

Event-triggered reporting is however beneficial too, and might be necessary in order to allow the eNodeB to react quickly so as to prevent e.g. an increased interference due to some wrong uplink timing. Some events are described in the following.

The configuration of an SCell can be used as a trigger by the UE to start reporting of the measurement results to the eNodeB. The measurement and reporting is done according to one exemplary embodiment for configured and deactivated Scell. Providing the measurement results to the eNodeB everytime a new SCell is configured, has additional benefits. In more detail, the eNodeB has the opportunity to check whether a different timing advance (multi-TA) is required for the newly configured SCell. Furthermore, the eNodeB can already calculate the necessary timing advance for the SCell and optionally also signal it to the mobile terminal. In other words, even though the SCell is deactivated (i.e. not used for transmission), the mobile terminal already knows which timing advance to use for this SCell. Thus, when the SCell is activated, the mobile terminal can immediately apply the previously-received timing advance for the SCell, and already transmit with the correct uplink time alignment. Therefore, the activation of an SCell would be faster for example compared to the approach where RACH needs to be performed on a newly activated SCell in order to achieve uplink synchronization. Essentially, the activation delay for an SCell when using the present invention would be the same as for Rel~10, where SCells have the same timing advance as the PCell.

Alternatively, the activation of an SCell can be used as a trigger by the UE to start measurements and/or reporting of the measurement results. The advantage of using the activation as a trigger is that, when the eNodeB activates an SCell it also intends to schedule transmissions on the SCell. In order to determine the correct timing advance used for the uplink transmissions on the activated SCell, it's beneficial to provide the eNodeB with up-to-date measurement results.

Another option to be used as trigger is that the mobile terminal receives from the eNodeB a specific request to report the measurement results to the eNodeB. This would allow the eNodeB to decide case-by-case whether the reporting of the measurement results is necessary or not. There are several possibilities how to transmit this request from the eNodeB to the mobile terminal. For instance, a flag within the RRC messages which configure the SCell, e.g RRC connection reconfiguration message, could explicitly request for measurement result reporting.

Or, the activation/deactivation command (MAC CE) as illustrated in Fig. 10 could contain a flag which explicitly indicates the need for timing info reporting, i.e. the eNodeB explicitly request the mobile terminal to report the measurement results. The flag could be signaled by using the free "reserved bit" in the activation/deactivation MAC control element. Since the activation of an already activated SCell is supported (also referred to as reactivation), the activation/deactivation MAC control element could be sent by the eNodeB at any time for requesting reporting of measurement results, without the need to actually activate or deactivate any of the SCells.

Another possibility would be to re-use the so-called "RACH order" message, which is a physical layer signaling (PDCCH with DCI format 1A). According to one embodiment, the RACH order itself is used, i.e. the mobile terminal being requested to make a RACH on the SCell could be interpreted differently by the mobile terminal, namely to perform the report the measurement results. Alternatively, some predefined codepoints or combination of field codepoints within a RACH order for an SCell could be used as a request for reporting. For example, a RACH order for an SCell with ra-Preambleindex set to "000000" (i.e. normally indicating that the UE should make a contention-based RACH) could be redefined to request the reporting. Or, a predefined carrier indicator (CI) codepoint for the case of cross-scheduling can be used as request. The advantage would be that the uplink resource allocation where the mobile terminal shall transmit the measurement results can be sent together with the request for measuring and/or reporting, hence reducing the reporting delay.

Another trigger event for reporting the measurement results could be that the measurement results performed in connection with the uplink-time-alignment of the SCell exceed a certain preconfigured limit. This is especially beneficial in cases where the eNodeB would not be aware of the necessity of using a timing advance for the SCell different to the one of the PCell. The eNodeB might not always have sufficient knowledge from e.g. an OAM (Operation, Administration and Maintenance usually providing cell deployment info like presence of repeaters or RRHs). Also, the need for multi-timing-advance depends on the position of the UE (see Fig. 16 and corresponding description). Thus, e.g. a frequency-selective repeater could be transparent to the eNodeB, and is only made visible to the eNodeB by the mobile terminal reporting on a high downlink reception time difference. Or even if the eNodeB is aware of the FSR, it does not know when exactly the mobile terminal will receive the SCell not anymore from the eNodeB but via the FSR.

Another trigger could be the expiry of the timing advance timer, started by the mobile terminal when applying an initial timing advance or a timing advance update. In case the timing advance timer expires, i.e. no timing advance update is received, the mobile terminal can perform one of the various embodiments of the invention.

Step of *measuring* and *reporting by the UE*

As has been explained until now, the mobile terminal measures and reports the downlink reception time difference $\Delta_{SCell\text{-}PCell}Rx_{DL}$ between the SCell and PCell. Alternatively or in addition, the mobile terminal could measure and report a reception transmission time difference between the PCell and the SCell $\Delta_{SCell\text{-}PCell}Rx_{DL}\text{-}Tx_{UL}$.

$$\Delta_{SCell\text{-}PCell}Rx_{DL}\text{-}Tx_{UL} = T_{DL\_RX\_SCell} - T_{UL\_TX\_PCell}$$

as is also depicted in Fig. 18 or 19.

Put into words, the reception transmission time difference between the PCell and SCell is the time difference between the time when the mobile terminal transmits an uplink radio frame on the PCell and the time when the mobile terminal receives a downlink radio frame on the SCell. The uplink radio frame and downlink radio frame shall refer to the same radio frame number.

As can be seen from either Fig. 18 or 19, the downlink reception time difference $\Delta_{SCell\text{-}PCell}Rx_{DL}$ can be calculated based on the reception transmission time difference $\Delta_{SCell\text{-}PCell}Rx_{DL}\text{-}Tx_{UL}$ and the timing advance of the PCell $TA_{PCell}$, in particular by:

$$\Delta_{SCell\text{-}PCell}Rx_{DL} = \Delta_{SCell\text{-}PCell}Rx_{DL}\text{-}Tx_{UL} - TA_{PCell} \qquad (equation\ 9)$$

where $TA_{PCell}$ could also be substituted by the time measured between $T_{UL-TX-PCell}$ and $T_{DL-RX-PCell}$. The measured time between $T_{UL-TX\_PCell}$ and $T_{DL\_RX-PCell}$ could also be reported to the eNodeB along with the reception transmission time difference.

Measuring and reporting the reception transmission time difference instead of the downlink reception time difference is beneficial, since for future techniques like Cooperative multi-point (COMP) transmissions in the uplink, the reception transmission time difference could be used to control the uplink transmission timing. Furthermore, it might be more preferably from the implementation point of view.

The reception transmission time difference $\Delta_{SCell\text{-}PCell}Rx_{DL}\text{-}Tx_{UL}$ is then reported to the eNodeB, which then uses equation 9 to calculate the downlink reception time difference $\Delta_{SCell\text{-}PCell}Rx_{DL}$. Based on the calculated downlink reception time difference, the eNodeB can calculate the timing advance for the SCell as explained before and in more detail later.

It should be noted that the mobile terminal may for example count the number of samples as a way of determining the time difference. For example, in order to determine the downlink reception time difference, the mobile terminal would count the number of samples between the reception time of a downlink subframe in the PCell and the reception time of a downlink subframe in the SCell. For instance, the downlink subframes may refer to common reference signals (CRS).

*Reporting of the measurement results*

The mobile terminal, after performing the measurements, transmits the results to the eNodeB. As explained before, the measurements may refer to the downlink reception time difference $\Delta_{SCell\text{-}PCell}Rx_{DL}$ or to the reception transmission time difference difference $\Delta_{SCell\text{-}PCell}Rx_{DL}\text{-}Tx_{UL}$ between the PCell and SCell.

The reporting itself could be implemented in principle on several layers, e.g. RRC layer or MAC layer. Other measurements like mobility or positioning measurements are signaled on the RRC layer too. Since the timing advance commands are generated by the MAC layer, it could be beneficial from an implementation point of view, to also implement the reporting of the measurement results on the MAC layer.

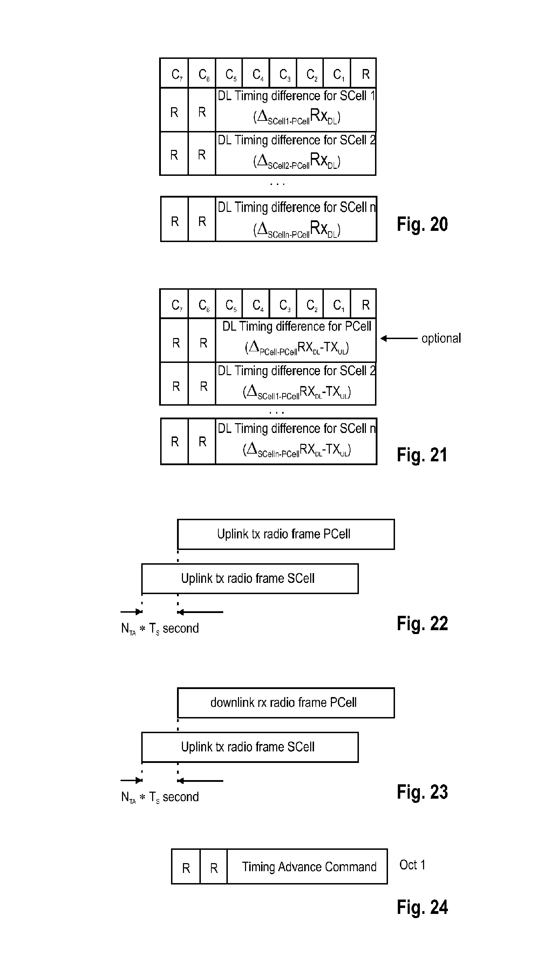

Fig. 20 and 21 illustrate the format of a MAC control element which can be used to transmit the measurement results from the mobile terminal to the eNodeB. As apparent, the structure of the MAC CEs is similar to the extended power headroom MAC CE. The size depends on the number of configured or configured and activated SCells, i.e. on the number of SCells for which measuring and reporting is to be performed. In more detail, Fig. 20 shows a MAC control element to transmit the downlink reception time difference between the PCell and all the available SCells 1-n.

On the other hand, Fig. 21 illustrates the MAC control element to transmit the reception transmission time difference between the PCell and all the available SCells 1-n. Since the time between $T_{UL\text{-}TX\text{-}PCell}$ and $T_{DL\text{-}RX\_PCell}$ corresponds to $TA_{PCell}$, and hence should be actually known by the eNodeB, in an alternative embodiment this information must not be reported to the eNodeB.

Instead of reporting the downlink reception time difference and the reception transmission time difference for all SCells, the mobile terminal may only report them for the particular SCell which is to be time-aligned.

Furthermore, the time differences could be encoded and indicated in the number of samples, i.e. the mobile reports a particular number of samples, and the eNodeB can then use the number of samples and a sample time to derive the actual time differences.

As already mentioned previously, the measurement results are preferably transmitted on the physical uplink shared channel, PUSCH, of the PCell.

*Determining the timing advance for the SCell*

In the previous embodiments of the invention, it was assumed that the eNodeB calculates a timing advance value as known from the standard RACH procedure, i.e. a timing advance that is applied by the mobile terminal relative to the beginning of downlink radio frames received via the downlink SCell, as exemplified in Fig. 18 and 19 (see arrow $TA_{SCell}$). This may be termed as an absolute value, since the timing advance value is of the same type as the timing advance defined by the standard, not to be defined relative to the PCell but relative to the downlink reception of radio frames in the SCell.

There are however other alternatives too. The timing advance calculated by the eNodeB and applied by the mobile terminal does not need to be relative to the beginning of downlink radio frames received via the downlink SCell; other references can be chosen. For example, the calculated and applied timing advance can be relative to the beginning of downlink radio frames received via the PCell $T_{DL\_RX\_PCell}$, or relative to the beginning of uplink radio frames transmitted via the PCell $T_{UL\text{-}TX\text{-}PCell}$.

In case the timing advance is calculated relative to the beginning of uplink radio frames transmitted via the PCell, it basically refers to the difference of the timing advance between the PCell and SCell $\Delta TA_{PCell\text{-}SCell}$. where considering equation 6:

$$\Delta TA_{PCell\text{-}SCell} = -2 \cdot \Delta_{SCell\text{-}PCell}Rx_{DL} + 2 \cdot \Delta_{SCell\text{-}PCell}Tx_{DL} - \Delta_{SCell}PD_{UL\text{-}DL}$$

Thus, the timing advance determined by the eNodeB and transmitted to the mobile terminal is $\Delta TA_{PCell\text{-}SCell}$. The mobile terminal in turn applies this value relative to the beginning of uplink radio frames received via the PCell, to determine the uplink timing for uplink transmissions performed on the SCell. This is exemplified in Fig. 22, where the timing advance is indicated by the number of samples $N_{TA}$, and is then multiplied with the sample time $T_S$ to acquire the actual difference in time to apply for uplink transmissions in the SCell compared to the uplink transmissions in the PCell.

In case the timing advance is calculated relative to the beginning of downlink radio frames received via the downlink PCell, the timing advance value is

$$TA_{SCell} - \Delta_{SCell\text{-}PCell}Rx_{DL}$$

as can be deduced from Fig. 18 and Fig. 19. Thus, the eNodeB first calculates the timing advance value $TA_{SCell}$ and subtracts therefrom the received downlink reception time difference $\Delta_{SCell\text{-}PCell}Rx_{DL}$. The calculation result is then reported to the mobile terminal, which sets the timing of uplink transmissions on the SCell based on the received timing advance relative to the beginning of the downlink radio frame received by the mobile terminal in the PCell. This is exemplified in Fig. 23, where the timing advance is indicated by the number of samples $N_{TA}$, and is then multiplied with the sample time $T_S$ to acquire the actual difference in time to apply for uplink transmissions in the SCell.

*Transmitting the timing advance command*

The calculated timing advance can be transmitted to the mobile terminal e.g. using the downlink shared channel of the SCell to which the timing advance shall be applied. Fig. 24 shows the format of a timing advance command to be used for transmitting the calculated timing advance from the eNodeB to the mobile terminal, according to one particular embodiment of the invention. If the timing advance information calculated and transmitted to the mobile terminal is the $TA_{SCell}$ (and not some of the relative values mentioned above in connection with Fig. 22 and 23), 11 bits are preferably used to transmit the timing advance for the SCell to achieve the necessary granularity (same as for the initial TA command known from the standard).

On the other hand, less bits suffice if the timing advance is smaller, due to being relative to another timing.

One example is using a new MAC control element to convey the timing advance information with e.g. 8 bits. Alternatively, the timing advance update command, known from Release 8 of LTE, can be used, having a format as shown in Fig. 24. One of the free R~bits could be used to distinguish between an actual timing advance update command as known from the standard, and the timing advance information according to one of the various embodiments of the invention.

Since some embodiments use a relative timing advance (see description in connection with Fig. 22 and 23), the six bits provided by the timing advance update command may provide sufficient granularity.

Another alternative would be that the eNB sends Timing Advance information not only for one SCell but for all configured respectively configured and activated SCells. In case the UE reports timing information for all configured respectively configured and activated SCells according to a previous embodiment, it could make sense to also report all the calculated TA in response.

*Grouping of SCells*

In the scenario assumed for Fig. 16, 17 and 18, SCell1 and SCell2 have the same timing advance in the uplink since the propagation delay for SCell1 and SCell2 is the same. In said case, the SCell1 and SCell2 can be said to form a timing advance group.

Further to this scenario, there may be several configured respectively configured and activated SCells, forming different timing advance groups, depending on whether the SCells can be uplink-time-aligned using the same timing advance value. As already explained, there are several reasons leading to the need for different timing advances between various SCells of a same mobile terminal. An example is one or more frequency-selective repeater, amplifying the signals of only some of the SCells.

In any case, if the mobile terminal stores a mapping of SCells to specific timing advance groups, when having to time-align an SCell1, belonging to a timing advance group with a time-aligned SCell2, the mobile terminal can immediately apply the timing advance previously used for the time-aligned SCell2, to time-align the uplink transmissions of SCell1 too. Thus, there would be no need to perform all the steps of the invention.

The mapping of SCells to timing advance groups can be configured and updated by the eNodeB only.

*Hardware and Software Implementation of the Invention*

Another embodiment of the invention relates to the implementation of the above described various embodiments using hardware and software. In this connection the invention provides a user equipment (mobile terminal) and a eNodeB (base station). The user equipment is adapted to perform the methods described herein. Furthermore, the eNodeB comprises means that enable the eNodeB to determine the power status of respective user equipments from the power status information received from the user equipments and to consider the power status of the different user equipments in the scheduling of the different user equipments by its scheduler.

It is further recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

It should be further noted that the individual features of the different embodiments of the invention may individually or in arbitrary combination be subject matter to another invention.

It would be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

## Claims

1. A method for time aligning uplink transmissions by a mobile terminal in a mobile communication system, the mobile terminal being in communication with an aggregation access point and being configured with a time-aligned uplink reference cell and with a non-time-aligned uplink target cell, the method comprising the steps of:

   measuring by the mobile terminal transmission and/or reception time difference information relating to transmissions on the target cell and/or the reference cell,
   transmitting the measurement results from the mobile terminal to the aggregation access point,
   determining by the aggregation access point a target timing advance based on at least the received measurement results and on a reference timing advance used for uplink transmissions on the time-aligned reference cell,
   transmitting by the aggregation access point the target timing advance to the mobile terminal, and
   time-aligning by the mobile terminal the uplink target cell by adjusting a timing for uplink transmissions on the uplink target cell based on the target timing advance received from the aggregation access point.

2. The method according to claim 1, wherein the step of measuring by the mobile terminal comprises:

   determining by the mobile terminal a downlink reception time difference $(\Delta_{Scell-PCell}Rx_{DL})$ between the target and reference cell, by measuring the time between the beginning of a first downlink subframe on the target cell $(T_{DL-RX-SCell})$ and
   the beginning of the corresponding downlink subframe on the reference cell $(T_{DL-RX-PCell})$, wherein downlink subframes on the reference and target cell refer to the same subframe number, and optionally
   wherein the measurement results, transmitted to the aggregation access point, comprise the downlink reception time difference between the target and reference cell.

3. The method according to one of claims 1 to 2, wherein the step of measuring by the mobile terminal further comprises:

   determining by the mobile terminal a reception transmission time difference between the target and reference cell $(\Delta_{Scell-PCell}Rx_{DL} - Tx_{UL})$, by measuring the time difference between the time when the mobile terminal transmits an uplink radio frame on the reference cell $(T_{UL-TX-PCell})$ and the time when the mobile terminal receives a downlink radio frame on the target cell $(T_{DL-RX-SCell})$, wherein the uplink radio frame and and the downlink radio frame relate to the same radio frame, and optionally
   wherein the measurement results, transmitted to the aggregation access point, comprise the reception transmission time difference between the target and reference cell.

4. The method according to claim 3, wherein the step of determining the target timing advance further comprises the step of:

   determining a downlink reception time difference between the target cell and the reference cell $(\Delta_{Scell-Pcell}Rx_{DL})$ by subtracting the reception transmission time difference from the timing advance of the reference cell, and preferably

wherein the step of determining the target timing advance is based on the downlink reception time difference.

5. The method according to one of claims 1 to 4, wherein the step of determining the target timing advance is further based on a downlink transmission time difference ($\Delta_{Scell\text{ - }PCell}Tx_{DL}$) between the target cell and the reference cell, wherein
the downlink transmission time difference between the target cell and the reference cell is the time difference between the beginning of a downlink subframe on the reference cell ($T_{DL\_TX-PCell}$) and the beginning of the corresponding downlink subframe on the target cell ($T_{DL\_TX\_SCell}$), wherein the downlink subframes refer to the same subframe number.

6. The method according to one of claims 1 to 5, wherein the step of time-aligning the target cell comprises setting the transmission of uplink radio frames on the uplink target cell relative to the beginning of downlink radio frames received via the downlink target cell, using the target timing advance determined by the aggregation access point considering that the setting of the transmission of the uplink radio frames on the uplink target cell will be relative to the beginning of downlink radio frames received via the downlink target cell, respectively, or
setting the transmission of uplink radio frames on the uplink target cell relative to the beginning of downlink radio frames received via the downlink reference cell, using the target timing advance determined by the aggregation access point considering that the setting of the transmission of the uplink radio frames on the uplink target cell will be relative to the beginning of downlink radio frames received via the downlink reference cell, or
setting the transmission of uplink radio frames on the uplink target cell relative to the beginning of uplink radio frames transmitted via the uplink reference cell, using the target timing advance determined by the aggregation access point considering that the setting of the transmission of the uplink radio frames on the uplink target cell will be relative to the beginning of uplink radio frames transmitted via the uplink reference cell.

7. The method according to one of claims 1 to 6, wherein the step of measuring the time difference information by the mobile terminal and of transmitting the measurement results to the aggregation access point is:

- o performed periodically, and/or
- o triggered by predetermined events, such as:

  i. configuration and/or activation of the target cell
  ii. the measurement results exceed a predetermined threshold
  iii. expiry of a timing advance timer
  iv. receiving a measurement reporting request from the aggregation access point.

8. The method according to claim 7, wherein the measurement reporting request from the aggregation access point is:

- o a deactivation/activation command for deactivating/activating a configured cell, including a flag indicating the request for measurement reporting, the flag preferably being set in one of the reserved bits of the deactivation/activation command, or
- o a radio resource control connection reconfiguration message, including a flag indicating the request for measurement reporting, or
- o a random access channel, RACH, order message, or
- o a random access channel, RACH, order message, with a predetermined codepoint or a predetermined combination of codepoints indicating the request for measurement reporting.

9. A mobile terminal for time-aligning uplink transmissions in a mobile communication system, the mobile terminal being in communication with an aggregation access point and being configured with a time-aligned-uplink reference cell and with a non-time-aligned uplink target cell, the mobile terminal comprising:

a processor adapted to measure transmission and/or reception time difference information relating to transmissions on the target and/or the reference cell,
a transmitter adapted to transmit the measurement results to the aggregation access point,
a receiver to receive a target timing advance from the aggregation access point, and
the processor and transmitter adapted to time-align the uplink target cell by adjusting a timing for uplink transmissions on the uplink target cell based on the target timing advance received from the aggregation access point.

10. The mobile terminal according to claim 9, wherein the processor is adapted to determine a downlink reception time

difference $(\Delta_{Scell\text{ -}PCell}Rx_{DL})$ between the target and reference cell, by measuring the time between the beginning of a first downlink subframe on the target cell $(T_{DL-RX-SCell})$ and the beginning of the corresponding downlink subframe on the reference cell $(T_{DL-RX-PCell})$, wherein downlink subframes on the reference and target cell refer to the same subframe number, and optionally the transmitter is adapted to transmit the downlink reception time difference between the target and reference cell as the measurement results to the aggregation access point, and/or

wherein the processor is adapted to determine a reception transmission time difference between the target and reference cell $(\Delta_{Scell\text{ -}PCell}Rx_{DL}\text{ -}Tx_{UL})$, by measuring the time difference between the time when the mobile terminal transmits an uplink radio frame on the reference cell $(T_{UL-TX-PCell})$ and the time when the mobile terminal receives a downlink radio frame on the target cell $(T_{DL-RX-SCell})$, wherein the uplink radio frame and and the downlink radio frame relate to the same radio frame, and optionally the transmitter is adapted to transmit the reception transmission time difference between the target and reference cell as measurement results to the aggregation access point.

11. The mobile terminal according to one of claims 10, wherein the processor and transmitter time-aligning the uplink target cell comprises:

setting the transmission of uplink radio frames on the uplink target cell relative to the beginning of downlink radio frames received via the downlink target cell, using the target timing advance determined by the aggregation access point considering that the setting of the transmission of the uplink radio frames on the uplink target cell will be relative to the beginning of downlink radio frames received via the downlink target cell, respectively, or setting the transmission of uplink radio frames on the uplink target cell relative to the beginning of downlink radio frames received via the downlink reference cell, using the target timing advance determined by the aggregation access point considering that the setting of the transmission of the uplink radio frames on the uplink target cell will be relative to the beginning of downlink radio frames received via the downlink reference cell, or setting the transmission of uplink radio frames on the uplink target cell relative to the beginning of uplink radio frames transmitted via the uplink reference cell, using the target timing advance determined by the aggregation access point considering that the setting of the transmission of the uplink radio frames on the uplink target cell will be relative to the beginning of uplink radio frames transmitted via the uplink reference cell.

12. An aggregation access point for providing a timing advance to a mobile terminal in a mobile communication system, the mobile terminal being in communication with the aggregation access point and being configured with a time-aligned uplink reference cell and with a non-time-aligned uplink target cell, the aggregation access point comprising:

a receiver adapted to transmit measurement results from the mobile terminal, the measurement results referring to transmission and/or reception time difference information relating to transmissions on the target cell and/or reference cell,
a processor adapted to determine a target timing advance based on at least the received measurement results and on a reference timing advance used for uplink transmissions on the time-aligned reference cell,
a transmitter adapted to transmit the target timing advance to the mobile terminal.

13. The aggregation access point according to claim 12, wherein the receiver is adapted to receive as the measurement results:

a downlink reception time difference between the target and reference cell $(\Delta_{Scell\text{ -}PCell}Rx_{DL})$, being the time between the beginning of a first downlink subframe on the target cell $(T_{DL-RX-SCell})$ and the beginning of the corresponding downlink subframe on the reference cell $(T_{DL-RX-PCell})$, wherein downlink subframes on the reference and target cell refer to the same subframe number, or
a reception transmission time difference between the target and reference cell $(\Delta_{Scell\text{ -}PCell}Rx_{DL}\text{ -}Tx_{UL})$, being the time difference between the time when the mobile terminal transmits an uplink radio frame on the reference cell $(T_{UL\_TX-PCell})$ and the time when the mobile terminal receives a downlink radio frame on the target cell $(T_{DL-RX-SCell})$, wherein the uplink radio frame and the downlink radio frame relate to the same radio frame, and preferably wherein in case the receiver is adapted to receive the reception transmission time difference as the measurement results, the processor is further adapted to determine a downlink reception time difference between the target cell and the reference cell $(\Delta_{Scell\text{ -}PCell}Rx_{DL})$ by subtracting the reception transmission time difference from the timing advance of the reference cell.

14. The aggregation access point according to claim 13, wherein the processor is adapted to determine the target timing advance based on the downlink reception time difference, and preferably further based on a downlink transmission

time difference ($\Delta_{Scell\text{-}PCell}Tx_{DL}$) between the target cell and the reference cell, wherein the downlink transmission time difference between the target cell and the reference cell is the time difference between the beginning of a downlink subframe on the reference cell ($T_{DL\_TX-PCell}$) and the beginning of the corresponding downlink subframe on the target cell ($T_{DL\_TX-SCell}$), wherein the downlink subframes refer to the same subframe number.

**15.** A computer readable medium storing instructions that, when executed by a processor of a mobile terminal, cause the mobile terminal to time align uplink transmissions in a mobile communication system, by:

measuring transmission and/or reception time difference information relating to transmissions on the target and/or the reference cell,
transmitting the measurement results to the aggregation access point,
receiving a target timing advance from the aggregation access point, and
time-aligning the uplink target cell by adjusting a timing for uplink transmissions on the uplink target cell based on the target timing advance received from the aggregation access point.

EP 2 557 867 A1

Fig. 1

35

MME / Serving GW    MME / Serving GW

S1 interface
X2 interface

eNB

eNB

eNB

E-UTRAN

**Fig. 2**

sub-frame

downlink slot $T_{\text{slot}}$

downlink slot $T_{\text{slot}}$

$N_{\text{symb}}^{\text{DL}}$ OFDM symbols

$k = N_{\text{RB}}^{\text{DL}} N_{\text{sc}}^{\text{RB}} - 1$

$N_{\text{RB}}^{\text{DL}} \times N_{\text{sc}}^{\text{RB}}$ subcarriers

$k = 0$

$l = 0$

$l = N_{\text{symb}}^{\text{DL}} - 1$

**Fig. 3**

One downlink slot $T_{\text{slot}}$

$N_{\text{symb}}^{\text{DL}}$ OFDM symbols

$k = N_{\text{RB}}^{\text{DL}} N_{\text{sc}}^{\text{RB}} - 1$

Resource block
$N_{\text{symb}}^{\text{DL}} \times N_{\text{sc}}^{\text{RB}}$ resource elements

Resource element $(k,l)$

$N_{\text{RB}}^{\text{DL}} \times N_{\text{sc}}^{\text{RB}}$ subcarriers

$N_{\text{sc}}^{\text{RB}}$ subcarriers

$k = 0$

$l = 0$

$l = N_{\text{symb}}^{\text{DL}} - 1$

Fig. 4

**Fig. 5**

*Radio Bearers*

*PDCP*

ROHC | ROHC

Security | Security

*RLC*

Segm. ARQ etc | ... | Segm. ARQ etc

*CCCH*

*Logical Channels*

Scheduling / Priority Handling

Multiplexing

*MAC*

HARQ | ... | HARQ

*Transport Channels*

UL-SCH on $CC_1$ | UL-SCH on $CC_z$

**Fig. 6**

UE                                          eNodeB

Random Access Preamble 701

Random Access Response 702

Scheduled Transmission 703

Contention Resolution 704

**Fig. 7**

UE                                          eNodeB

Random access Preamble Assignement 801

Random Access Preamble 802

Random Access Response 803

**Fig. 8**

Fig. 9a

Fig. 9b

| $C_7$ | $C_6$ | $C_5$ | $C_4$ | $C_3$ | $C_2$ | $C_1$ | R | Oct1 |
|-------|-------|-------|-------|-------|-------|-------|---|------|

**Fig. 10**

| $C_7$ | $C_6$ | $C_5$ | $C_4$ | $C_3$ | $C_2$ | $C_1$ | R |
|-------|-------|-------|-------|-------|-------|-------|---|
| R | V | PH (Type 2, PCell) | | | | | |
| R | R | $P_{CMAXc}$ 1 | | | | | |
| R | V | PH (Type 1, PCell) | | | | | |
| R | R | $P_{CMAXc}$ 2 | | | | | |
| R | V | PH (Type 1, Scell 1) | | | | | |
| R | R | $P_{CMAXc}$ 3 | | | | | |

...

| R | V | PH (Type 1, Scell n) | | | | | |
|---|---|---------------------|--|--|--|--|--|
| R | R | $P_{CMAX,c}$ m | | | | | |

**Fig. 11**

**Fig. 12**

**Fig. 13**

**Fig. 14**

**Fig. 15**

Fig. 16

**Fig. 17**

Fig. 18

Fig. 19

| $C_7$ | $C_6$ | $C_5$ | $C_4$ | $C_3$ | $C_2$ | $C_1$ | R |
|---|---|---|---|---|---|---|---|
| R | R | DL Timing difference for SCell 1 ($\Delta_{SCell1-PCell}Rx_{DL}$) | | | | | |
| R | R | DL Timing difference for SCell 2 ($\Delta_{SCell2-PCell}Rx_{DL}$) | | | | | |

. . .

| R | R | DL Timing difference for SCell n ($\Delta_{SCelln-PCell}Rx_{DL}$) |
|---|---|---|

**Fig. 20**

| $C_7$ | $C_6$ | $C_5$ | $C_4$ | $C_3$ | $C_2$ | $C_1$ | R |
|---|---|---|---|---|---|---|---|
| R | R | DL Timing difference for PCell ($\Delta_{PCell-PCell}RX_{DL}-TX_{UL}$) | | | | | |
| R | R | DL Timing difference for SCell 2 ($\Delta_{SCell1-PCell}RX_{DL}-TX_{UL}$) | | | | | |

← optional

. . .

| R | R | DL Timing difference for SCell n ($\Delta_{SCelln-PCell}RX_{DL}-TX_{UL}$) |
|---|---|---|

**Fig. 21**

Uplink tx radio frame PCell

Uplink tx radio frame SCell

$N_{TA} * T_s$ second

**Fig. 22**

downlink rx radio frame PCell

Uplink tx radio frame SCell

$N_{TA} * T_s$ second

**Fig. 23**

| R | R | Timing Advance Command | Oct 1 |
|---|---|---|---|

**Fig. 24**

Europäisches
Patentamt

European
Patent Office

Office européen
des brevets

## EUROPEAN SEARCH REPORT

Application Number

EP 11 17 7286

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/151213 A1 (ERICSSON TELEFON AB L M [SE]; BALDEMAIR ROBERT [SE]; ASTELY DAVID [SE]) 29 December 2010 (2010-12-29) * page 3, line 2 - line 7 * * page 7, line 5 - line 26 * * page 8, line 21 - line 26 * * page 9, line 2 - line 13 * * page 11, line 4 - page 12, line 16; claim 1; figures 5a,5b * | 1,9,12, 15 | INV. H04W56/00 |
| A | EP 2 343 935 A2 (ACER INC [TW]) 13 July 2011 (2011-07-13) * paragraphs [0003], [0006]; claim 1 * | 1-15 | |
| A | EP 2 230 870 A1 (HTC CORP [TW]) 22 September 2010 (2010-09-22) * paragraphs [0005], [0007], [0008]; claims 1-6 * | 1-15 | |
| A | WO 2010/074485 A2 (LG ELECTRONICS INC [KR]; AHN JOON KUI [KR]; LEE JUNG HOON [KR]; SEO DO) 1 July 2010 (2010-07-01) * claim 1 * | 1-15 | TECHNICAL FIELDS SEARCHED (IPC) H04W |

The present search report has been drawn up for all claims

| Place of search | Date of completion of the search | Examiner |
|---|---|---|
| The Hague | 15 November 2011 | Bischof, Jean-Louis |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

......................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 11 17 7286

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2011

| Patent document cited in search report | | Publication date | Patent family member(s) | | Publication date |
|---|---|---|---|---|---|
| WO 2010151213 | A1 | 29-12-2010 | NONE | | |
| EP 2343935 | A2 | 13-07-2011 | CN | 102158947 A | 17-08-2011 |
| | | | EP | 2343935 A2 | 13-07-2011 |
| | | | US | 2011170535 A1 | 14-07-2011 |
| EP 2230870 | A1 | 22-09-2010 | CN | 101841907 A | 22-09-2010 |
| | | | EP | 2230870 A1 | 22-09-2010 |
| | | | TW | 201110764 A | 16-03-2011 |
| | | | US | 2010238908 A1 | 23-09-2010 |
| WO 2010074485 | A2 | 01-07-2010 | EP | 2351260 A2 | 03-08-2011 |
| | | | KR | 20100075378 A | 02-07-2010 |
| | | | US | 2011235620 A1 | 29-09-2011 |
| | | | WO | 2010074485 A2 | 01-07-2010 |

EPO FORM P0459

**EP 2 557 867 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **STEFANIA SESIA ; ISSAM TOUFIK ; MATTHEW BAKER.** LTE - The UMTS Long Term Evolution: From Theory to Practice. John Wiley & Sons, Ltd, 2009